(19) Europäisches Patentamt
European Patent Office
Office européen des brevets

(11) EP 4 762 927 A1

(12) EUROPEAN PATENT APPLICATION

(43) Date of publication:
**24.06.2026 Bulletin 2026/26**

(21) Application number: **24222108.3**

(22) Date of filing: **20.12.2024**

(51) International Patent Classification (IPC):
***A01N 43/80*** *(2006.01)* ***A01P 13/00*** *(2006.01)*
***A01N 43/40*** *(2006.01)* ***A01N 43/54*** *(2006.01)*

(52) Cooperative Patent Classification (CPC):
(C-Sets available)
**A01N 43/80; A01N 43/40; A01N 43/54; A01P 13/00**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bayer Aktiengesellschaft**
**51373 Leverkusen (DE)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

# (54) HERBICIDAL COMBINATIONS

(57) The invention relates to novel herbicidal active compound combinations which comprise substituted isoxazolincarboxamides or agrochemical acceptable salts thereof and substituted aminopyridines and aminopyrimidines. They can be used with particularly good results for the control of weeds in various crops of useful plants.



Processed by Luminess, 75001 PARIS (FR)

(Cont. next page)

(52) Cooperative Patent Classification (CPC): (Cont.)

C-Sets
**A01N 43/80, A01N 43/40, A01N 43/54**

## Description

The invention relates to novel herbicidal active compound combinations which comprise substituted isoxazolincarboxamides or agrochemical acceptable salts thereof and substituted aminopyridines and aminopyrimidines. They can be used with particularly good results for the control of weeds in various crops of useful plants.

Substituted aminopyridines are already known as effective herbicides from the international applications with the publication numbers WO 2020/135235 A1 and WO 2018/208582 A1. The compounds can be used either non-selective or selective depending on the timing and crops. However, the activity and compatibility with crop plants are not entirely satisfactory under all conditions.

Substituted isoxazolincarboxamides are already known as effective herbicides from WO2018/228985 A1 and WO2019/145245 A1. The compounds can be used either non-selective or selective depending on the timing and crops. However, the activity and compatibility with crop plants are not entirely satisfactory under all conditions.

Surprisingly, it has now been found that certain substituted isoxazolincarboxamides, when used together with substituted aminopyridines and aminopyrimidines described below, can be used particularly advantageously as broad-spectrum combination preparations for the control of weeds in crops of useful plants, such as, for example, in cereals, maize and soybean excersing a significant synergistic effect.

The invention provides herbicidal combinations comprising

(a) substituted isoxazolincarboxamides of the formula (I) or agrochemical acceptable salts thereof

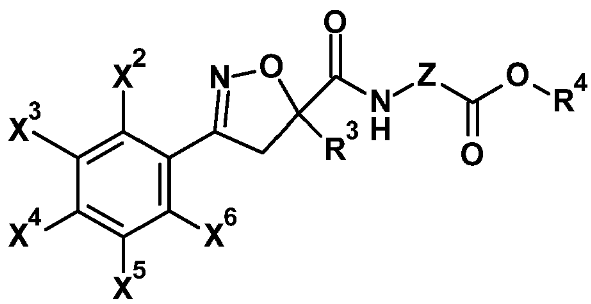

(I)

in which

| | |
|---|---|
| $R^3$ | is $(C_1\text{-}C_3)$-alkyl, $(C_1\text{-}C_3)$-alkoxy oder $(C_2\text{-}C_3)$-alkenyl; |
| $R^4$ | is hydrogen or $(C_1\text{-}C_6)$-alkyl; |
| Z | means Z-1 or Z-2: |

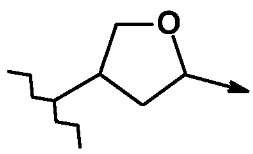

Z-1

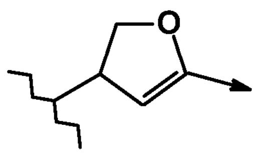

Z-2

where the arrow in each case denotes a bond to the group C=W of the formula (I);

| | |
|---|---|
| $X^2$, $X^4$ und $X^6$ | independently of each other mean hydrogen or fluorine; |
| $X^3$ und $X^5$ | independently of each other mean hydrogen, fluorine or chlorine; |

and

(b) one or more compounds selected from compounds B1 to B23 specified in the table below: Table 1:

| (B) | Chemical structure | Name | CAS-RN |
|---|---|---|---|
| B1 | 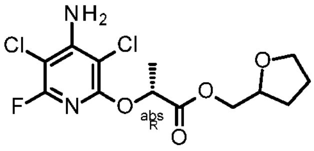 | (Tetrahydrofuran-2-yl)methyl (2R)-2-[(4-amino-3,5-dichloro-6-fluoro-2-pyridyl)oxy]propanoate | 2445983-82-2 |
| B2 | 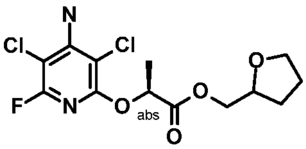 | (Tetrahydrofuran-2-yl)methyl (2S)-2-[(4-amino-3,5-dichloro-6-fluoro-2-pyridyl)oxy]propanoate | |
| B3 | 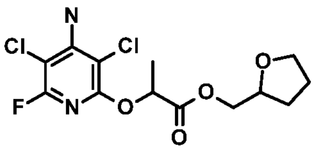 | (Tetrahydrofuran-2-yl)methyl (2R/S)-2-[(4-amino-3,5-dichloro-6-fluoro-2-pyridyl)oxy]propanoate | 2374902-16-4 |
| B4 | 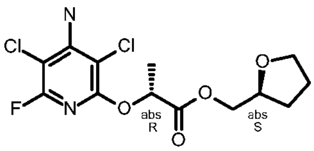 | [(2S)-Tetrahydrofuran-2-yl]methyl (2R)-2-[(4-amino-3,5-dichloro-6-fluoro-2-pyridyl)oxy]propanoate | |
| B5 | 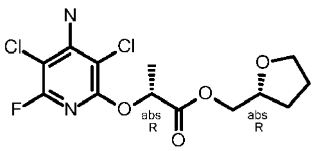 | [(2R)-Tetrahydrofuran-2-yl]methyl (2R)-2-[(4-amino-3,5-dichloro-6-fluoro-2-pyridyl)oxy]propanoate | |
| B6 | 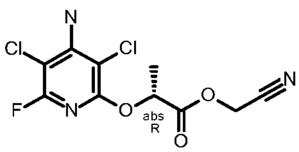 | Cyanomethyl (2R)-2-[(4-amino-3,5-dichloro-6-fluoro-2-pyridyl)oxy]propanoate | 2445983-51-5 |
| B7 | 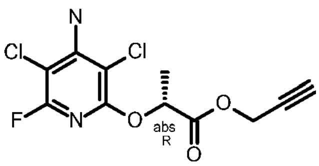 | Prop-1-yn-3-yl (2R)-2-[(4-amino-3,5-dichloro-6-fluoro-2-pyridyl)oxy]propanoate | 2445983-59-3 |
| B8 | 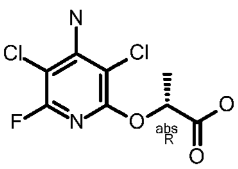 | (2R)-2-[(4-Amino-3,5-dichloro-6-fluoro-2-pyridyl)oxy] propanoic acid | 2445980-81-2 |
| B9 | 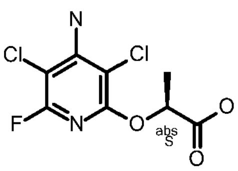 | (2S)-2-[(4-Amino-3,5-dichloro-6-fluoro-2-pyridyl)oxy] propanoic acid | |
| B10 | 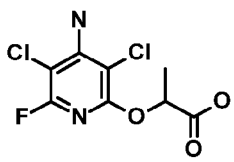 | 2-[(4-Amino-3,5-dichloro-6-fluoro-2-pyridyl)oxy]propanoic acid | 50848-50-5 |

(continued)

| (B) | Chemical structure | Name | CAS-RN |
|---|---|---|---|
| B11 | 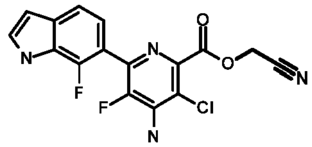 | Cyanomethyl 4-amino-3-chloro-5-fluoro-6-(7-fluoro-1H-indol-6-yl)pyridin-2-carboxylate | 2251111-18-7 |
| B12 | 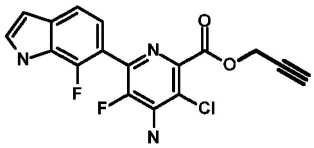 | Prop-1-yn-3-yl 4-amino-3-chloro-5-fluoro-6-(7-fluor-1H-indol-6-yl)pyridin-2-carboxylate | 2251111-17-6 |
| B13 | 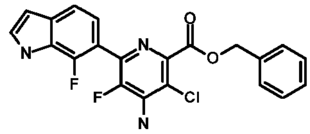 | Benzyl 4-amino-3-chloro-5-fluoro-6-(7-fluor-1H-indol-6-yl)pyridin-2-carboxylate | 1884642-19-6 |
| B14 | 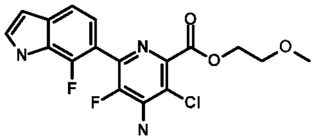 | Methoxyethyl 4-amino-3-chloro-5-fluoro-6-(7-fluor-1H-indol-6-yl)pyridin-2-carboxylate | |
| B15 | 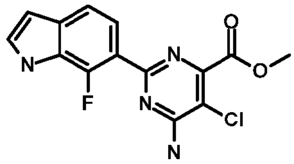 | Methyl 6-amino-5-chloro-2-(7-fluoro-1*H*-indol-6-yl)-4-pyrimidinecarboxylate | 1628702-50-0 |
| B16 | 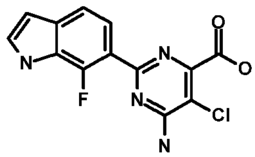 | 6-Amino-5-chloro-2-(7-fluoro-1*H*-indol-6-yl)-4-pyrimidinecarboxylic acid | |
| B17 | 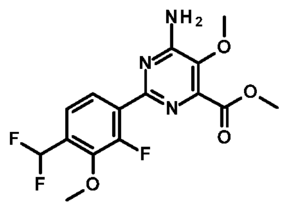 | Methyl 6-amino-2-[4-(difluoromethyl)-2-fluoro-3-methoxy-phenyl] -5 -methoxy-pyrimidine-4-carboxylate | 3054208-49-7 |
| B18 | 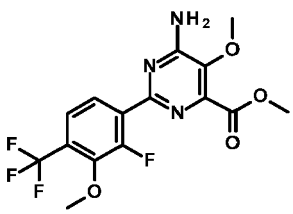 | Methyl 6-amino-2-[4-(trifluoromethyl)-2-fluoro-3-methoxy-phenyl] -5 -methoxy-pyrimidine-4-carboxylate | 3054208-48-6 |
| B19 | 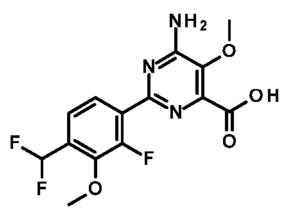 | 6-Amino-2-[4-(difluoromethyl)-2-fluoro-3 -methoxy-phenyl] -5 - methoxy-pyrimidine-4-carboxylic acid | |

(continued)

| (B) | Chemical structure | Name | CAS-RN |
|---|---|---|---|
| B20 | 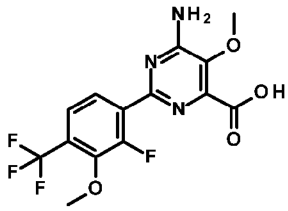 | 6-Amino-2-[4-(trifluoromethyl)-2-fluoro-3 -methoxy-phenyl] -5 - methoxy-pyrimidine-4-carboxylic acid | 3054208-46-4 |
| B21 | 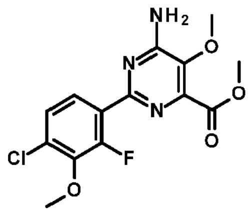 | Methyl 6-amino-2-[4-chloro-2-fluoro-3 -methoxy-phenyl] -5 - methoxy-pyrimidine-4-carboxylate | 1126318-85-1 |
| B22 | 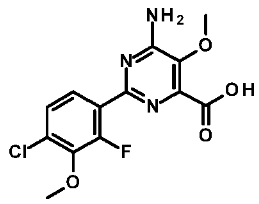 | 6-Amino-2-[4-chloro-2-fluoro-3-methoxy-phenyl] -5 -methoxy-pyrimidine-4-carboxylic acid | 1126319-69-4 |
| B23 | 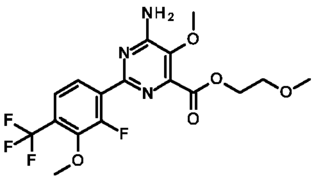 | Methoxyethyl 6-amino-2-[4-(trifluoromethyl)-2-fluoro-3-methoxy-phenyl] -5 -methoxy-pyrimidine-4-carboxylate | 3054209-19-4 |

The chemical structures and IUPAC names of the aforementioned herbicides are complemented by the CAS RN (Chemical Abstract Service Registry Number) if available.

The CAS RN is a reference number that is widely accepted and utilized to enabling a clear assignment with respect to stereoisomers, esters and salts.

Compounds B1, B3 and B8 are described in WO 2020/135235 A1.

Compounds B6 and B7 are described in WO 2021/036251 A1, WO 2021/017502 A1, WO 2021/017817 A1 and WO 2020/135235 A1.

Compound B10 is described in US 3761486 A.

Compounds B11, B12 and B13 are described in WO 2018/208582 A1.

Compound B15 is described in WO 2014/151005 A1.

Compounds B17, B18 and B20 are described in CN118515618 A and WO 2024/169666 A1.

Compound B21 is described in CN 118515618 A, WO 2017/201377 A1 and WO 2009/029735 A1

Compound B22 is described in WO 2009/029735 A1, WO 2010/099279 A1 and WO 2020/133403 A1.

Compound B23 is described in CN 118515618 A and WO 2024/188052 A1.

Compounds B2, B4, B5, B9, B14, B16 and B19 can be synthesized and isolated as pure enantiomers analogously.

The invention also relates to all stereoisomers and mixtures thereof which are encompassed by the formula (I) but not defined specifically. For the sake of simplicity, however, reference will always be made hereinafter to compounds of the formula (I), even though this means not only the pure compounds but also, if appropriate, mixtures with different proportions of isomeric compounds.

Depending on the nature of the substituents defined above, the compounds of the formula (I) might have acidic properties and can form salts, and if appropriate also internal salts or adducts with inorganic or organic bases or with metal ions. If the compounds of the formula (I) bear hydroxyl, carboxyl or other groups which induce acidic properties, these compounds can be reacted with bases to give salts. Suitable bases are, for example, hydroxides, carbonates, hydrogencarbonates of the alkali metals and alkaline earth metals, especially those of sodium, potassium, magnesium and calcium, and also ammonia, primary, secondary and tertiary amines having ($C_1$-$C_4$)-alkyl groups, mono-, di- and

trialkanolamines of ($C_1$-$C_4$)-alkanols, choline and chlorocholine, and organic amines, such as trialkylamines, morpholine, piperidine or pyridine. These salts are compounds in which the acidic hydrogen is replaced by an agriculturally suitable cation, for example metal salts, especially alkali metal salts or alkaline earth metal salts, especially sodium and potassium salts, or else ammonium salts, salts with organic amines or quaternary ammonium salts, for example with cations of the formula $[NRR'R''R''']^+$ in which R to R‴ are each independently an organic radical, especially alkyl, aryl, aralkyl or alkylaryl. Also suitable are alkylsulfonium and alkylsulfoxonium salts, such as ($C_1$-$C_4$)-trialkylsulfonium and ($C_1$-$C_4$)-trialkylsulfoxonium salts.

Some of the compounds of the formula (I) can form salts by addition of a suitable inorganic or organic acid, for example mineral acids, for example HCl, HBr, $H_2SO_4$, $H_3PO_4$ or $HNO_3$, or organic acids, for example carboxylic acids such as formic acid, acetic acid, propionic acid, oxalic acid, lactic acid or salicylic acid or sulfonic acids, for example p-toluenesulfonic acid, onto a basic group, for example amino, alkylamino, dialkylamino, piperidino, morpholino or pyridino. In such a case, these salts comprise the conjugate base of the acid as the anion.

Suitable substituents present in deprotonated form, for example sulfonic acids or carboxylic acids, may form internal salts with groups which for their part can be protonated, such as amino groups.

Definitions

Halogen represents radicals of fluorine, chlorine, bromine and iodine. Preference is given to the radicals of fluorine and chlorine.

Alkyl means saturated straight-chain or branched hydrocarbyl radicals having the number of carbon atoms specified in each case, e.g. $C_1$-$C_6$-alkyl such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl,1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl.

Alkenyl means unsaturated straight-chain or branched hydrocarbyl radicals having the number of carbon atoms specified in each case and one double bond in any position, e.g. $C_2$-$C_6$-alkenyl such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl.

Alkoxy means saturated straight-chain or branched alkoxy radicals having the number of carbon atoms specified in each case, for example $C_1$-$C_6$-alkoxy such as methoxy, ethoxy, propoxy, 1-methylethoxy, butoxy, 1-methylpropoxy, 2-methylpropoxy, 1,1-dimethylethoxy, pentoxy, 1-methylbutoxy, 2-methylbutoxy, 3-methylbutoxy, 2,2-dimethylpropoxy, 1-ethylpropoxy, hexoxy, 1,1-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy. Halogen-substituted alkoxy means straight-chain or branched alkoxy radicals having the number of carbon atoms specified in each case, where some or all of the hydrogen atoms in these groups may be replaced by halogen atoms as specified above, e.g. $C_1$-$C_2$-haloalkoxy such as chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloroethoxy, 1-bromoethoxy, 1-fluoroethoxy, 2-fluoroethoxy, 2,2-difluoroethoxy, 2,2,2-trifluoroethoxy, 2-chloro-2-fluoroethoxy, 2-chloro-1,2-difluoroethoxy, 2,2-dichloro-2-fluoroethoxy, 2,2,2-trichloroethoxy, pentafluoroethoxy and 1,1,1-trifluoroprop-2-oxy.

The compounds according to the invention are defined in general terms by the formula (I).

Preferred substituents or ranges of the radicals given in the formulae mentioned above and below are illustrated hereinafter.

*In a first embodiment* of the present invention:

$R^3$ is methyl, vinyl or methoxy;

$R^4$ is hydrogen , methyl, ethyl oder isopropyl;

Z means Z-1 or Z-2:

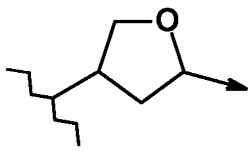

Z-1

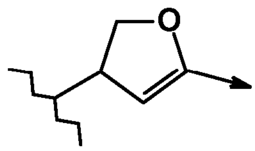

Z-2

where the arrow in each case denotes a bond to the group C=W of the formula (I);

$X^2$, $X^4$ and $X^6$ is hydrogen;
$X^3$ and $X^5$ independently of each other mean hydrogen, fluorine or chlorine.

*In a second embodiment* of the present invention:

$R^3$ is methyl, vinyl or methoxy;
$R^4$ is hydrogen, methyl or isopropyl;
Z means Z-1 or Z-2:

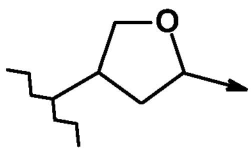

Z-1

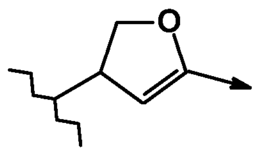

Z-2

where the arrow in each case denotes a bond to the group C=W of the formula (I);

$X^2$, $X^4$ and $X^6$ is hydrogen
$X^3$ and $X^5$ independently of each other mean hydrogen, fluorine or chlorine.

Preferred is $R^4$ methyl.
Preferred is $R^3$ vinyl.
Preferred is Z Z-1.
Preferred is $X^3$ and $X^5$ are fluorine.

Table 2: Examples for compounds of the formula (I)

| Cpd. No. | IUPAC Name | Structural formula |
|---|---|---|
| A1 | methyl rel-(2R,4R)-4-[[3-(3,5-dichlorophenyl)-5 -methoxy-4H-isoxazole-5-carbonyl]amino]tetrahydrofuran-2-carboxylate | 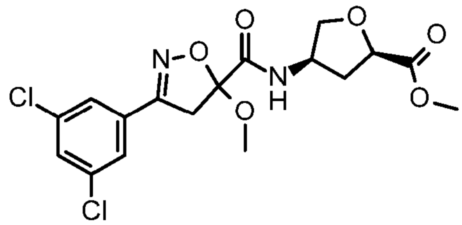 rel-(2R,4R) |
| A2 | methyl rel-(2R,4R)-4-[[3-(3,5-dichlorophenyl)-5 -vinyl-4H-isoxazole-5-carbonyl]amino]tetrahydrofuran-2-carboxylate | 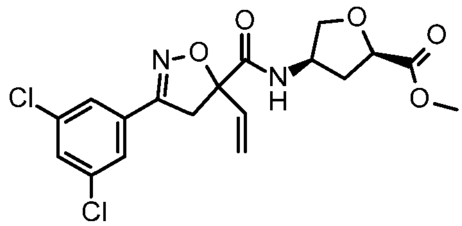 rel-(2R,4R) |
| A3 | methyl(2R*,4R*)-4-[[(5S)-3-(3,5-difluorophenyl)-5 -vinyl-4H-isoxazole-5-carbonyl]amino]tetrahydrofuran-2-carboxylate | 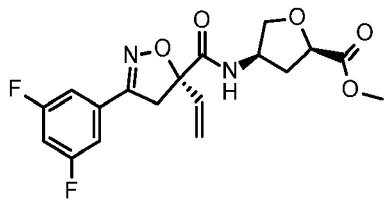 rel-(2R,4R) |
| A4 | isopropyl rel-(2R,4R)-4-[[3-(3-fluorophenyl)-5 -methyl-4H-isoxazole-5-carbonyl]amino]tetrahydrofuran-2-carboxylate | 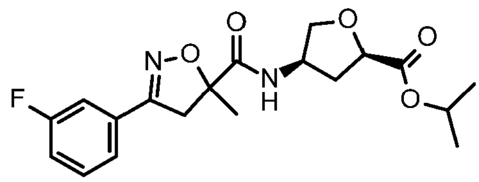 rel-(2R,4R) |
| A5 | methyl (3RS)-3-[[(5S)-3-(3,5-difluorophenyl)-5 -vinyl-4H-isoxazole-5 -carbonyl] amino] -2,3 - dihydrofuran-5 -carboxylate | 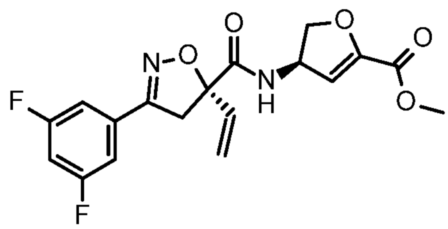 |
| A6 | methyl (3RS)-3-[[(5R)-3-(3,5-difluorophenyl)-5 -methyl-4H-isoxazole-5 -carbonyl] amino] -2,3 - dihydrofuran-5 -carboxylate | 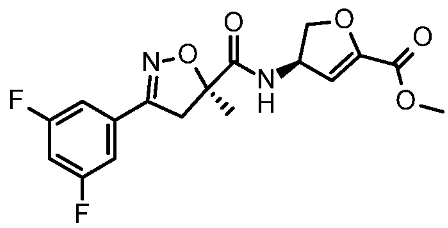 |

Thus, especially preferred binary combinations according to the invention outlined herein are the binary combinations as shown in the following tables 3.1 to 3.6:

Table 3.1: Especially preferred binary combinations comprising A3

| Binary combination | Compound of formula (I) | Compound (B) |
|---|---|---|
| Z1-1 | A3 | B1 |
| Z1-2 | A3 | B2 |
| Z1-3 | A3 | B3 |
| Z1-4 | A3 | B4 |
| Z1-5 | A3 | B5 |
| Z1-6 | A3 | B6 |
| Z1-7 | A3 | B7 |
| Z1-8 | A3 | B8 |
| Z1-9 | A3 | B9 |
| Z1-10 | A3 | B10 |
| Z1-11 | A3 | B11 |
| Z1-12 | A3 | B12 |
| Z1-13 | A3 | B13 |
| Z1-14 | A3 | B14 |
| Z1-15 | A3 | B15 |
| Z1-16 | A3 | B16 |
| Z1-17 | A3 | B17 |
| Z1-18 | A3 | B18 |
| Z1-19 | A3 | B19 |
| Z1-20 | A3 | B20 |
| Z1-21 | A3 | B21 |
| Z1-22 | A3 | B22 |
| Z1-23 | A3 | B23 |

Table 3.2: Especially preferred binary combination comprising A4

| Binary combination | Compound of formula (I) | Compound (B) |
|---|---|---|
| Z2-1 | A4 | B1 |
| Z2-2 | A4 | B2 |
| Z2-3 | A4 | B3 |
| Z2-4 | A4 | B4 |
| Z2-5 | A4 | B5 |
| Z2-6 | A4 | B6 |
| Z2-7 | A4 | B7 |
| Z2-8 | A4 | B8 |
| Z2-9 | A4 | B9 |
| Z2-10 | A4 | B10 |
| Z2-11 | A4 | B11 |
| Z2-12 | A4 | B12 |
| Z2-13 | A4 | B13 |

(continued)

| Binary combination | Compound of formula (I) | Compound (B) |
|---|---|---|
| Z2-14 | A4 | B14 |
| Z2-15 | A4 | B15 |
| Z2-16 | A4 | B16 |
| Z2-17 | A4 | B17 |
| Z2-18 | A4 | B18 |
| Z2-19 | A4 | B19 |
| Z2-20 | A4 | B20 |
| Z2-21 | A4 | B21 |
| Z2-22 | A4 | B22 |
| Z2-23 | A4 | B23 |

Table 3.3: Especially preferred binary combination comprising A1

| Binary combination | Compound of formula (I) | Compound (B) |
|---|---|---|
| Z3-1 | A1 | B1 |
| Z3-2 | A1 | B2 |
| Z3-3 | A1 | B3 |
| Z3-4 | A1 | B4 |
| Z3-5 | A1 | B5 |
| Z3-6 | A1 | B6 |
| Z3-7 | A1 | B7 |
| Z3-8 | A1 | B8 |
| Z3-9 | A1 | B9 |
| Z3-10 | A1 | B10 |
| Z3-11 | A1 | B11 |
| Z3-12 | A1 | B12 |
| Z3-13 | A1 | B13 |
| Z3-14 | A1 | B14 |
| Z3-15 | A1 | B15 |
| Z3-16 | A1 | B16 |
| Z3-17 | A1 | B17 |
| Z3-18 | A1 | B18 |
| Z3-19 | A1 | B19 |
| Z3-20 | A1 | B20 |
| Z3-21 | A1 | B21 |
| Z3-22 | A1 | B22 |
| Z3-23 | A1 | B23 |

Table 3.4: Especially preferred binary combination comprising A2

| Binary combination | Compound of formula (I) | Compound (B) |
|---|---|---|
| Z4-1 | A2 | B1 |

(continued)

| Binary combination | Compound of formula (I) | Compound (B) |
|---|---|---|
| Z4-2 | A2 | B2 |
| Z4-3 | A2 | B3 |
| Z4-4 | A2 | B4 |
| Z4-5 | A2 | B5 |
| Z4-6 | A2 | B6 |
| Z4-7 | A2 | B7 |
| Z4-8 | A2 | B8 |
| Z4-9 | A2 | B9 |
| Z4-10 | A2 | B10 |
| Z4-11 | A2 | B11 |
| Z4-12 | A2 | B12 |
| Z4-13 | A2 | B13 |
| Z4-14 | A2 | B14 |
| Z4-15 | A2 | B15 |
| Z4-16 | A2 | B16 |
| Z4-17 | A2 | B17 |
| Z4-18 | A2 | B18 |
| Z4-19 | A2 | B19 |
| Z4-20 | A2 | B20 |
| Z4-21 | A2 | B21 |
| Z4-22 | A2 | B22 |
| Z4-23 | A2 | B23 |

Table 3.5: Especially preferred binary combination comprising A5

| Binary combination | Compound of formula (I) | Compound (B) |
|---|---|---|
| Z5-1 | A5 | B1 |
| Z5-2 | A5 | B2 |
| Z5-3 | A5 | B3 |
| Z5-4 | A5 | B4 |
| Z5-5 | A5 | B5 |
| Z5-6 | A5 | B6 |
| Z5-7 | A5 | B7 |
| Z5-8 | A5 | B8 |
| Z5-9 | A5 | B9 |
| Z5-10 | A5 | B10 |
| Z5-11 | A5 | B11 |
| Z5-12 | A5 | B12 |
| Z5-13 | A5 | B13 |
| Z5-14 | A5 | B14 |

(continued)

| Binary combination | Compound of formula (I) | Compound (B) |
|---|---|---|
| Z5-15 | A5 | B15 |
| Z5-16 | A5 | B16 |
| Z5-17 | A5 | B17 |
| Z5-18 | A5 | B18 |
| Z5-19 | A5 | B19 |
| Z5-20 | A5 | B20 |
| Z5-21 | A5 | B21 |
| Z5-22 | A5 | B22 |
| Z5-23 | A5 | B23 |

Table 3.6: Especially preferred binary combination comprising A6

| Binary combination | Compound of formula (I) | Compound (B) |
|---|---|---|
| Z6-1 | A6 | B1 |
| Z6-2 | A6 | B2 |
| Z6-3 | A6 | B3 |
| Z6-4 | A6 | B4 |
| Z6-5 | A6 | B5 |
| Z6-6 | A6 | B6 |
| Z6-7 | A6 | B7 |
| Z6-8 | A6 | B8 |
| Z6-9 | A6 | B9 |
| Z6-10 | A6 | B10 |
| Z6-11 | A6 | B11 |
| Z6-12 | A6 | B12 |
| Z6-13 | A6 | B13 |
| Z6-14 | A6 | B14 |
| Z6-15 | A6 | B15 |
| Z6-16 | A6 | B16 |
| Z6-17 | A6 | B17 |
| Z6-18 | A6 | B18 |
| Z6-19 | A6 | B19 |
| Z6-20 | A6 | B20 |
| Z6-21 | A6 | B21 |
| Z6-22 | A6 | B22 |
| Z6-23 | A6 | B23 |

Particularly preferred binary combinations according to the invention outlined herein are the binary combinations as shown in the following table 4:

Table 4: Particularly preferred binary combination comprising:

| Binary combination | Compound of formula (I) | Compound (B) |
|---|---|---|
| Z1-1 | A3 | B1 |
| Z1-8 | A3 | B8 |
| Z1-11 | A3 | B11 |
| Z1-12 | A3 | B12 |
| Z1-23 | A3 | B23 |
| Z2-1 | A4 | B1 |
| Z2-8 | A4 | B8 |
| Z2-11 | A4 | B11 |
| Z2-12 | A4 | B12 |
| Z2-23 | A4 | B23 |
| Z3-1 | A1 | B1 |
| Z3-8 | A1 | B8 |
| Z3-11 | A1 | B11 |
| Z3-12 | A1 | B12 |
| Z3-23 | A1 | B23 |
| Z4-1 | A2 | B1 |
| Z4-8 | A2 | B8 |
| Z4-11 | A2 | B11 |
| Z4-12 | A2 | B12 |
| Z4-23 | A2 | B23 |
| Z5-1 | A5 | B1 |
| Z5-8 | A5 | B8 |
| Z5-11 | A5 | B11 |
| Z5-12 | A5 | B12 |
| Z5-23 | A5 | B23 |
| Z6-1 | A6 | B1 |
| Z6-8 | A6 | B8 |
| Z6-11 | A6 | B11 |
| Z6-12 | A6 | B12 |
| Z6-23 | A6 | B23 |

Most particularly preferred binary combinations according to the invention outlined herein are the binary combinations as shown in the following table 5:

Table 5: Most particularly preferred binary combination comprising:

| Binary combination | Compound of formula (I) | Compound (B) |
|---|---|---|
| Z1-1 | A3 | B1 |
| Z1-8 | A3 | B8 |
| Z1-11 | A3 | B11 |
| Z1-12 | A3 | B12 |

(continued)

| Binary combination | Compound of formula (I) | Compound (B) |
|---|---|---|
| Z1-23 | A3 | B23 |

The above-mentioned herbicidal combinations may be combined with a safener, e.g. isoxadifen-ethyl, cyprosulfamide, mefenpyr-diethyl, cloquintocet-mexyl, cloquintocet and methyl-{ [5-(4-chloro-2-fluorophenyl)-1-(2,4-difluorophenyl)-1H-1,2,4-triazole-3-yl]oxy}acetate including its hydrates and salts, for example its lithium, sodium, potassium, calcium, magnesium, aluminium, iron, ammonium, quaternary ammonium, sulphonium or phosphonium salts.

Surprisingly, it has now been found that the above-defined active compound combinations of substituted isoxazolincarboxamides of the general formula (**I**) and/or their salts and B, have particularly high herbicidal activity - higher than the mere addition of the activities of the herbicides applied alone (synergism) - and can be used in various crops, in particular in cereals (especially wheat and barley) and maize, but also in soya beans, potatoes and rice, for the control of weeds.

The active compound combinations according to the invention can be applied before and after emergence of the plants, that is to say by the pre-emergence and post-emergence method.

The synergistic effects are observed in the case of joint deployment of active ingredients (a) and (b), but can also frequently occur in the case of offset application (splitting). It is also possible to apply the herbicides (a) or (b) or the herbicidal combination (a) and (b) in multiple portions (sequential application). For example, one or more pre-emergence applications may be followed by a post-emergence application, or an early post-emergence application may be followed by a moderately late or late post-emergence application. Preference is given to the simultaneous or immediately successive application of the active ingredients of the respective combination, if appropriate in several portions. But application of the individual active ingredients of a combination at different times is also possible, and may be advantageous in the individual case. It is also possible to integrate other crop protection products into the system for application, for example the other active ingredients mentioned (other herbicides, fungicides, insecticides, acaricides etc.) and/or various auxiliaries, adjuvants and/or applications of fertilizer.

The active compound combinations according to the invention can be used, for example, in connection with the following plants:

Dicotyledonous weeds of the genera: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Dicotyledonous crops of the genera: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.

Monocotyledonous weeds of the genera: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monocotvledonous crops of the genera: Oryza, Zea, Triticum, Hordeum, Avena, Secale, Sorghum, Panicum, Saccharum, Ananas, Asparagus, Allium.

However, the use of the active compound combinations according to the invention is in no way restricted to these genera, but also extends in the same manner to other plants. According to the invention, crop plants are all plants and plant varieties including transgenic plants and plant varieties, where on transgenic plants and plant varieties it is also possible for synergistic effects to occur.

The invention furthermore relates to a method of reducing crop damage by treating the seed of the crop with the safener before sowing. This can be done in addition to the use of herbicide/safener combinations and compositions comprising thereof, which are highly suitable to protect crops from herbicide damage in pre-and post-emergence treatments.

*Composition*

Compositions within the context of the present invention comprise in addition to the combinations according to the invention one or more further component(s) selected from the group consisting of formulation auxiliaries, additives

customary in crop protection, and further agrochemically active compounds, such as fungicides, insecticides, acaricides etc.

*Additives*

Additives are for example, fertilizers and colorants.

The active compounds or active compound combinations can be converted into the customary formulations, such as solutions, emulsions, wettable powders, suspensions, powders, dusting agents, pastes, soluble powders, granules, suspoemulsion concentrates, natural and synthetic materials impregnated with active compound, and very fine capsules in polymeric substances.

These formulations are produced in a known manner, for example by mixing the active compounds with extenders, that is liquid solvents and/or solid carriers, optionally with the use of surfactants, that is emulsifiers and/or dispersants and/or foam-formers.

If the extender used is water, it is also possible to use, for example, organic solvents as auxiliary solvents. Suitable liquid solvents are essentially: aromatics, such as xylene, toluene or alkylnaphthalenes, chlorinated aromatics and chlorinated aliphatic hydrocarbons, such as chlorobenzenes, chloroethylenes or methylene chloride, aliphatic hydrocarbons, such as cyclohexane or paraffins, for example petroleum fractions, mineral and vegetable oils, alcohols, such as butanol or glycol, and also their ethers and esters, ketones, such as acetone, methyl ethyl ketone, methyl isobutyl ketone or cyclohexanone, strongly polar solvents, such as dimethylformamide and dimethyl sulphoxide, and also water.

Suitable solid carriers are:
for example ammonium salts and ground natural minerals, such as kaolins, clays, talc, chalk, quartz, attapulgite, montmorillonite or diatomaceous earth, ground synthetic minerals, such as finely divided silica, alumina and silicates, suitable solid carriers for granules are: for example crushed and fractionated natural rocks such as calcite, marble, pumice, sepiolite and dolomite, and also synthetic granules of inorganic and organic meals, and granules of organic material such as sawdust, coconut shells, maize cobs and tobacco stalks; suitable emulsifiers and/or foam-formers are: for example non-ionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates; suitable dispersants are: for example lignosulphite waste liquors and methylcellulose.

Tackifiers such as carboxymethylcellulose and natural and synthetic polymers in the form of powders, granules or latices, such as gum arabic, polyvinyl alcohol and polyvinyl acetate, and also natural phospholipids, such as cephalins and lecithins, and synthetic phospholipids, can be used in the formulations. Other possible additives are mineral and vegetable oils.

It is possible to use colorants such as inorganic pigments, for example iron oxide, titanium oxide and Prussian Blue, and organic dyestuffs, such as alizarin dyestuffs, azo dyestuffs and metal - phthalocyanine dyestuffs, and trace nutrients such as salts of iron, manganese, boron, copper, cobalt, molybdenum and zinc.

The formulations generally comprise from 0.1 to 95 per cent by weight of active compounds including the safeners, preferably between 0.5 and 90%.

The active compound combinations according to the invention are generally used in the form of finished formulations. However, the active compounds contained in the active compound combinations can also be mixed in individual formulations when used, i.e. in the form of tank mixes.

The novel active compound combinations, as such or in their formulations, can furthermore be used as a mixture with other known herbicides, finished formulations or tank mixes again being possible. A mixture with other known active compounds, such as fungicides, insecticides, acaricides, nematicides, bird repellents, growth factors, plant nutrients and agents which improve soil structure, is also possible. For certain intended uses, in particular in the post-emergence method, it may furthermore be advantageous to include, as further additives in the formulations, mineral or vegetable oils which are tolerated by plants (for example the commercial preparation "Rako Binol"), or ammonium salts such as, for example, ammonium sulphate or ammonium thiocyanate. The novel active compound combinations can be used as such, in the form of their formulations or the use forms prepared therefrom by further dilution, such as ready-to-use solutions, suspensions, emulsions, powders, pastes and granules. They are used in the customary manner, for example by washing, spraying, atomizing, dusting or scattering.

The advantageous effect of the crop plant compatibility of the active compound combinations according to the invention is particularly highly pronounced at certain amounts of herbicide and safener.

The amounts of the active compound combinations according to the invention applied can be varied within a certain range; they depend, inter alia, on the weather and on soil factors.

In general, the application rates of the herbicides are between 0,5 and 500 g a.i./ha, preferably between 1,0 and 250 g a.i./ha.

The ratios of (a):(b) based on weight, depending on the effective application rates, are generally in the range of 1:10 000 to 5000:1, preferably in the range of 1:1000 to 500:1, further preferably in the range of 1:100 to 100:1.

The herbicidal combination/compositions of the invention can also be combined with further herbicides and plant growth regulators, for example to supplement the activity spectrum. Combination partners usable for the compounds according to the invention in mixed formulations or in a tankmix are, for example, known active ingredients based on inhibition of, for example, acetolactate synthase, acetyl-CoA carboxylase, cellulose synthase, enolpyruvylshikimate-3-phosphate synthase, glutamine synthetase, p-hydroxyphenylpyruvate dioxygenase, phytoene desaturase, photosystem I, photosystem II, protoporphyrinogen oxidase, as known, for example, from Weed Research 26 (1986) 441-445 or "The Pesticide Manual", 14th edition, The British Crop Protection Council and the Royal Soc. of Chemistry, 2006, the corresponding "e-Pesticide Manual Version 4 (2006)", and literature cited therein. Further trade names and "common names" are listed in the "Compendium of Pesticide Common Names" (available on the Internet under http://www.alanwood.net/pesticides).

Examples of known herbicides which can be combined with the compounds of the invention include the active ingredients which follow (comment.: the compounds are designated either by the common name according to the International Organization for Standardization (ISO) or by the chemical name, in some cases together with a standard code number) and always encompass all use forms, such as acids, salts, esters and isomers, such as stereoisomers and optical isomers. The list includes one and in some cases also more than one application form:

Acetochlor, acifluorfen, acifluorfen-methyl, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, aminopyralid-dimethylammonium, aminopyralid-tripromine, amitrole, ammoniumsulfamate, anilofos, asulam, asulam-potassium, asulam sodium, atrazine, azafenidin, azimsulfuron, beflubutamid, (S)-(-)-beflubutamid, beflubutamid-M, benazolin, benazolin-ethyl, benazolin-dimethylammonium, benazolin-potassium, benfluralin, benfuresate, bensulfuron, bensulfuron-methyl, bensulide, bentazone, bentazone-sdium, benzobicyclon, benzofenap, bicyclopyrone, bifenox, bilanafos, bilanafos-sodium, bipyrazone, bispyribac, bispyribac-sodium, *bixlozone,* bromacil, bromacil-lithium, bromacil-sodium, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, cambendichlor, carbetamide, carfentrazone, carfentrazone-ethyl, chloramben, chloramben-ammonium, chloramben-diolamine, chlroamben-methyl, chloramben-methylammonium, chloramben-sodium, chlorbromuron, chlorfenac, chlorfenac-ammonium, chlorfenac-sodium, chlorfenprop, chlorfenprop-methyl, chlorflurenol, chlorflurenol-methyl, chloridazon, chlorimuron, chlorimuron-ethyl, chlorophthalim, chlorotoluron, chlorsulfuron, chlorthal, chlorthal-dimethyl, chlorthal-monomethyl, cinidon, cinidon-ethyl, cinmethylin, , exo-(+)-cinmethylin, i.e. (1R,2S,4S)-4-isopropyl-1-methyl-2-[(2-methylbenzyl)oxy]-7-oxabicyclo[2.2.1]heptane, exo-(-)-cinmethylin, i.e. (1R,2S,4S)-4-isopropyl-1-methyl-2-[(2-methylbenzyl)oxy]-7-oxabicyclo[2.2.1]heptane, cinosulfuron, clacyfos, clethodim, clodinafop, clodinafop-ethyl, clodinafop-propargyl, clomazone, clomeprop, clopyralid, clopyralid-methyl, clopyralid-olamine, clopyralid-potassium, clopyralid-tripomine, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (including theammonium, butotyl, -butyl, choline, diethylammonium, -dimethylammonium, - diolamine, -doboxyl, -dodecylammonium, etexyl, ethyl, 2-ethylhexyl, heptylammonium, isobutyl, isooctyl, isopropyl, isopropylammonium, lithium, meptyl, methyl, potassium, tetradecylammonium, triethylammonium, triisopropanolammonium, tripromine and trolamine salt thereof), 2,4-DB, 2,4-DB-butyl, -dimethylammonium, isooctyl, -potassium und -sodium, daimuron (dymron), dalapon, dalapon-calcium, dalapon-magnesium, dalapon-sodium, dazomet, dazomet-sodium, n-decanol, 7-deoxy-D-sedoheptulose, desmedipham, detosyl-pyrazolate (DTP), dicamba and its salts, e. g. dicamba-biproamine, dicamba-N,N-Bis(3-aminopropyl)methylamine, dicamba-butotyl, dicamba-choline, dicamba-diglycolamine, dicamba-dimethylammonium, dicamba-diethanolaminemmonium, dicamba-diethylammonium, dicamba-isopropylammonium, dicamba-methyl, dicamba-monoethanolaminedicamba-olamine, dicamba-potassium, dicamba-sodium, dicamba-triethanolamine, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-butotyl, dichlroprop-dimethylammonium, dichhlorprop-etexyl, dichlorprop-ethylammonium, dichlorprop-isoctyl, dichlorprop-methyl, dichlorprop-postassium, dichlorprop-sodium, dichlorprop-P, dichlorprop-P-dimethylammonium, dichlorprop-P-etexyl, dichlorprop-P-potassium, dichlorprop-sodium, diclofop, diclofop-methyl, diclofop-P, diclofop-P-methyl, diclosulam, difenzoquat, difenzoquat-metilsulfate, diflufenican, diflufenzopyr, diflufenzopyr-sodium, dimefuron, dimepiperate, dimesulfazet, dimethachlor, dimethametryn, dimethenamid, dimethenamid-P, dimetrasulfuron, dinitramine, dinoterb, dinoterb-acetate, diphenamid, diquat, diquat-dibromid, diquat-dichloride, dithiopyr, diuron, DNOC, DNOC-ammonium, DNOC-potassium, DNOC-sodium, endothal, endothal-diammonium, endothal-dipotassium, endothal-disodium, Epyrifenacil (S-3100), EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fhior-2-(trifhiormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenpyrazone, fenquinotrione, fentrazamide, flamprop, flamprop-isopropyl, flamprop-methyl, flamprop-M-isopropyl, flamprop-M-methyl, flazasulfuron, florasulam, florpyrauxifen, florpyrauxifen-benzyl, fluazifop, fluazifop-butyl, fluazifop-methyl, fluazifop-P, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupropanate-sdium, flupyrsulfuron, flupyrsulfuron-methyl, flupyrsulfuron-methyl-sodium, fluridone, flurochloridone, fluroxypyr, fluroxypyr-butometyl, fluroxypyr-meptyl, flurtamone, fluthiacet, fluthiacet-methyl, fomesafen, fomesafen-sodium, foramsulfuron, foramsulfuron sodium salt, fosamine, fosamine-ammonium, glufosinate, glufosinate-ammonium, glufosinate-sodium, L-glufosinate-ammonium, L-glufosiante-sodium, glufosinate-P-sodium, glufosinate-P-ammonium, glyphosate, glyphosate-ammonium, -isopropylammonium, -diammonium, -dimethylammonium, -potassium, -sodium, sesquisodium and -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, haloxifop-sodium, hexazinone, HNPC-A8169, i.e. prop-2-yn-1-yl (2S)-2-{3-[(5-tert-butylpyridin-2-yl)oxy]phenoxy}propanoate, HW-02, i.e. 1-(Dimethoxyphosphoryl)-ethyl-(2,4-dichlorphenoxy)acetat, hydantocidin, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazaquin.methyl, imazethapyr, imazethapyr-immonium, imazosulfuron, indanofan, indaziflam, iodosulfuron, iodosulfuron-methyl, iodosulfuron-methyl-sodium, ioxynil, ioxynil-lithium, -octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl } sulfonyl)-5,5-dimethyl-4,5-dihydro-1,2-oxazol, ketospiradox, ketospiradox-potassium, lactofen, lenacil, linuron, MCPA, MCPA-butotyl, - butyl, -dimethylammonium, -diolamine, -2-ethylhexyl, -ethyl, -isobutyl, isoctyl, -isopropyl, - isopropylammonium, -methyl, olamine, -potassium, -sodium and -trolamine, MCPB, MCPB-methyl, -ethyl und -sodium, mecoprop, mecoprop-butotyl, mecoprop- demethylammonium, mecoprop-diolamine, mecoprop-etexyl, mecoprop-ethadyl, mecoprop-isoctyl, mecoprop-methyl, mecoprop-potassium, mecoprop-sodium, and mecoprop-trolamine, mecoprop-P, mecoprop-P-butotyl, -dimethylammonium, -2-ethylhexyl and -potassium, mefenacet, mefluidide, mefluidide-diolamine, mefluidide-potassium, mesosulfuron, mesosulfuron-methyl, mesosulfuron sodium salt, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-methyl, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, NC-656, i.e. 3-[(isopropylsulfonyl)methyl]-N-(5-methyl-1,3,4-oxadiazol-2-yl)-5-(trifluoromethyl)[1,2,4]triazolo[4,3-a]pyridine-8-carboxamide, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefone, oxyfluorfen, paraquat, paraquat-dichloride, paraquat-dimethylsulfate, pebulate, pendimethalin, penoxsulam, pentachlorphenol, pentoxazone, pethoxamid, petroleum oils, phenmedipham, phenmedipham-ethyl, picloram, picloram-dimethylammonium, picloram-etexyl, picloram-isoctyl, picloram-methyl, picloram-olamine, picloram-potassium, picloram-triethylammonium, picloram-tripromine, picloram-trolamine, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinclorac-dimethylammonium, quinclorac-methyl, quinmerac, quinoclamine, quizalofop, quizalofop-ethyl, quizalofop-P, quizalofop-P-ethyl, quizalofop-P-tefuryl, QYM201, i.e. 1-{2-chloro-3-[(3-cyclopropyl-5-hydroxy-1-methyl-1H-pyrazol-4-yl)carbonyl]-6-(trifluoromethyl)phenyl}piperidin-2-one, rimsulfuron, saflufenacil, sethoxydim, siduron, simazine, simetryn, SL-261, sulcotrione, sulfentrazone, sulfometuron, sulfometuron-methyl, sulfosulfuron, , SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (trichloro acetic acid) and its salts, e.g. TCA-ammonium, TCA-calcium, TCA-ethyl, TCA-magnesium, TCA-sodium, tebuthiuron, tefuryltrione, tembotrione, tepraloxydim, terbacil, terbucarb, terbumeton, terbuthylazine, terbutryn, tetflupyrolimet, thaxtomin, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, triclopyr-butotyl, triclopyr-choline, triclopyr-ethyl, triclopyr-triethylammonium, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, 3-(2-chloro-4-fluoro-5-(3-methyl-2,6-dioxo-4-trifluoromethyl-3,6-dihydropyrimidin-1 (2H)-yl)phenyl)-5-methyl-4,5-dihydroisoxazole-5-carboxylic acid ethyl ester, 3-chloro-2-[3-(difluoromethyl)isoxazolyl-5-yl]phenyl-5-chloropyrimidin-2-yl ether, 2-(3,4-dimethoxyphenyl)-4-[(2-hydroxy-6-oxocyclohex-1-en-1-yl)carbonyl]-6-methylpyridazine-3(2*H*)-one, 2-({2-[(2-methoxyethoxy)methyl]-6-methylpyridin-3-yl}carbonyl)cyclohexane-1,3-dione, (5-hydroxy-1-methyl-1H-pyrazol-4-yl)(3,3,4-trimethyl-1,1-dioxido-2,3-dihydro-1-benzothiophen-5-yl)methanone, 1-methyl-4-[(3,3,4-trimethyl-1,1-dioxido-2,3 -dihydro-1-benzothiophen-5 - yl)carbonyl]-1H-pyrazol-5-yl propane-1-sulfonate, 4-{2-chloro-3-[(3,5-dimethyl-1H-pyrazol-1-yl)methyl] -4-(methylsulfonyl)benzoyl} -1-methyl- 1H-pyrazol-5 -yl 1,3-dimethyl-1H-pyrazole-4-carboxylate; cyanomethyl 4-amino-3-chloro-5-fluoro-6-(7-fluoro-1H-indol-6-yl)pyridine-2-carboxylate, prop-2-yn-1-yl 4-amino-3-chloro-5-fluoro-6-(7-fluoro-1H-indol-6-yl)pyridine-2-carboxylate, methyl 4-amino-3-chloro-5-fluoro-6-(7-fluoro-1H-indol-6-yl)pyridine-2-carboxylate, 4-amino-3-chloro-5-fluoro-6-(7-fluoro-1H-indol-6-yl) pyridine-2-carboxylic acid, benzyl 4-amino-3-chloro-5-fluoro-6-(7-fluoro-1H-indol-6-yl)pyridine-2-carboxylate, ethyl 4-amino-3-chloro-5-fluoro-6-(7-fluoro-1H-indol-6-yl)pyridine-2-carboxylate, methyl 4-amino-3-chloro-5-fluoro-6-(7-fluoro-1-isobutyryl-1H-indol-6-yl)pyridine-2-carboxylate, methyl 6-(1-acetyl-7-fluoro-1H-indol-6-yl)-4-amino-3-chloro-5-fluoropyridine-2-carboxylate, methyl 4-amino-3-chloro-6-[1-(2,2-dimethylpropanoyl)-7-fluoro-1H-indol-6-yl]-5-fluoropyridine-2-carboxylate, methyl 4-amino-3-chloro-5-fluoro-6-[7-fluoro-1-(methoxyacetyl)-1H-indol-6-yl]pyridine-2-carboxylate, potassium 4-amino-3-chloro-5-fluoro-6-(7-fluoro-1H-indol-6-yl)pyridine-2-carboxylate, sodium 4-amino-3-chloro-5-fluoro-6-(7-fluoro-1H-indol-6-yl)pyridine-2-carboxylate, butyl 4-amino-3-chloro-5-fluoro-6-(7-fluoro-1H-indol-6-yl)pyridine-2-carboxylate, 4-hydroxy-1-methyl-3-[4-(trifluoromethyl)pyridin-2-yl]imidazolidin-2-one, 3-(5-tert-butyl-1,2-oxazol-3-yl)-4-hydroxy-1-methylimidazolidin-2-one,

Abscisic acid, acibenzolar, acibenzolar-S-methyl, 1-aminocyclopro-1-yl carboxylic acid and derivatives thereof,5-Aminolävulinsäure, ancymidol, 6-benzylaminopurine, brassinolide, brassinolide-ethyl, catechin, chitooligosaccharides (CO; COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$, CAS No. 9012-76-4]), chitinous compounds, chlormequat chloride, cloprop, cyclanilide, 3-(Cycloprop-1-enyl)propionic acid, daminozide, dazomet, dazomet-sodium, n-decanol, dikegulac, dikegulac-sodium, endothal, endothal-dipotassium, -disodium, and mono(N,N-dimethylalkylammonium), ethephon, flumetralin, flurenol, flurenol-butyl, flurenol-methyl, flurprimidol, forchlorfenuron, gibberellic acid, inabenfide, indol-3-acetic acid (IAA), 4-indol-3-ylbutyric acid, isoprothiolane, probenazole, jasmonic acid, Jasmonic acid or derivatives thereof (e.g. Jasmonic acid methyl ester), lipo-chitooligosaccharides (LCO, sometimes referred to as symbiotic nodulation (Nod) signals (or Nod factors) or as Myc factors, consist of an oligosaccharide backbone of β-1,4-linked *N*-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues), linoleic acid or derivatives thereof, linolenic acid or derivatives thereof, maleic hydrazide, mepiquat chloride, mepiquat pentaborate, 1-methylcyclopropene, 3'-methyl abscisic acid, 2-(1-naphthyl)acetamide, 1-naphthylacetic acid, 2- naphthyloxyacetic acid, nitrophenolate-mixture, 4-Oxo-4[(2-phenylethyl)amino]butyric acid, paclobutrazol, 4-phenylbutyric acid, N-phenylphthalamic acid, prohexadione, prohexadione-calcium, prohydrojasmon, salicylic acid, , salicylic acid methyl ester, strigolacton, tecnazene, thidiazuron, triacontanol, trinexapac, trinexapac-ethyl, tsitodef, uniconazole, uniconazole-P, 2-fluoro-N-(3-methoxyphenyl)-*9H*-purin-6-amine.

If the respective common name encompasses more than one form of the active ingredient, the name preferably defines the commercially available form.

Each of the further active ingredients mentioned (= active ingredients (C*), (C1*), (C2*) etc.) may then preferably be combined with one of the binary combinations according to the present invention, according to the scheme (a)+(b)+(C*) or else according to the scheme (a)+(b)+(C1*)+(C2*) etc.

The stated amounts are application rates (g a.i./ha = grams of active substance per hectare) and hence also define the ratios in a co-formulation, a premix, a tankmix or a sequential application of the combined active ingredients.

The combinations can be applied both by the pre-emergence method and by the post-emergence method. This applies both to pre- and post-emergence with respect to the harmful plants and, in the case of selective control of the harmful plants, to pre- or post-emergence of the crop plants. Mixed forms are also possible, for example control of the harmful plants at their pre- or post-emergence stage after emergence of the crop plants.

The active ingredient combinations of the invention are suitable for control of a broad spectrum of weeds on uncultivated land, on pathways, on railway tracks, in industrial areas ("industrial weed control") or in plantation crops, such as temperate, subtropical and tropical climates or geographies. Examples of plantation crops are oil palms, nuts (e.g. almonds, hazelnuts, walnuts, macadamia), coconut, berries, rubber trees, citrus (e.g. oranges, lemons, mandarins), bananas, pineapples, cotton, sugarcane, tea, coffee, cacao and the like. They are likewise suitable for use in pomiculture (e.g. pomaceous fruits such as apples, pears, cherries, mangoes and kiwis) and viticulture. The combination/compositions can also be used for preparation for seeding ("burn-down", "no-till" or "zero-till" method) or for treatment after harvesting ("chemical fallow"). The possible uses of the active ingredient combinations also extend to weed control in tree crops, for example young Christmas tree crops or eucalyptus crops, in each case before planting or after planting (including "over-top" treatment).

The combination/compositions can also be used to control unwanted plant growth in economically important crop plants ("useful plants") such as wheat (hard and soft wheat), maize, soya, sugarbeet, sugarcane, cotton, rice, beans (for example, bush beans and broad beans), flax, barley, oats, rye, triticale, potato and millet/sorghum, pastureland and areas

of grass/lawn and plantation crops. Plantation crops are, *inter alia,* pomaceous fruit (apple, pear, quince), *Ribes* species (blackberry, raspberry), citrus, *Prunus* species (cherries, nectarines, almonds), nuts (walnut, pecan nut, hazelnut, cashew, macadamia), mango, cacao, coffee, grapevines (for eating or for making wine), palms (such as oil palms, date palms, coconut palms), eucalyptus, kaki, persimmon, caoutchouc, pineapple, banana, avocado, lychee, forest cultures (Eucalypteae, Piniaceae, Piceae, Meliaceae, etc.).

The active herbicidal ingredient combinations of the invention, in the respective use forms (= herbicidal products), have synergies with regard to herbicidal action and selectivity, and favourable action with regard to the spectrum of weeds. They have excellent herbicidal efficacy against a broad spectrum of economically important monocotyledonous and dicotyledonous annual harmful plants. The active ingredients also have good control over perennial harmful plants which are difficult to control and produce shoots from rhizomes, rootstocks or other perennial organs.

For application, the active ingredient combinations can be deployed onto the plants (e.g. harmful plants such as mono- or dicotyledonous weeds or unwanted crop plants), the seed (e.g. grains, seeds or vegetative propagation organs such as tubers or parts of shoots having buds), or the area in which the plants grow (e.g. the growing area).

The substances can be deployed prior to sowing (if appropriate also by incorporation into the soil), prior to emergence or after emergence. Preference is given to use by the early post-seeding pre-emergence method or by the post-emergence method in plantation crops against harmful plants that have not yet emerged or have already emerged. The application can also be integrated into weed management systems with divided repeated applications (sequentials).

Specific examples of some representatives of the mono- and dicotyledonous weed flora which can be controlled by the combinations/compositions according to the invention are as follows, although the enumeration is not intended to impose a restriction to particular species.

Among the monocotyledonous weed species, for example, Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Leptochloa, Lolium, Monochoria, Panicum, Paspalum, Phalaris, Phleum, Poa, Rottboellia, Sagittaria, Scirpus, Setaria, Sorghum, Sphenoclea and Cyperus species are covered by the annual group.

In the case of dicotyledonous weed species, the spectrum of action extends to species such as, for example, Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erodium, Erysimum, Euphorbia, Galeopsis, Galinsoga, Galium, Geranium, Hibiscus, Ipomoea, Kochia, Lamium, Lepidium, Lindemia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

If the active ingredient combinations of the invention are applied to the soil surface before germination, either the emergence of the weed seedlings is prevented completely or the weeds grow until they have reached the cotyledon stage, but then stop growing and ultimately die completely after three to four weeks have passed.

If the active ingredients are applied post-emergence to the green parts of the plants, growth stops after the treatment, and the harmful plants remain at the growth stage at the time of application, or they die completely after a certain time, and so this eliminates competition by the weeds, which is harmful to the crop plants, very early and in a sustained manner.

The herbicidal products of the invention are notable for a rapid onset and long duration of herbicidal action. In general, the rainfastness of the active ingredients in the combinations of the invention is favourable. A particular advantage is that the effective dosages of compounds (a) and (b) that are used in the combinations can be adjusted to such a low level that their soil action is optimally low. Therefore, the use thereof in sensitive crops is not just enabled, but groundwater contamination is also virtually prevented. The inventive combination of active ingredients allows the required application rate of the active ingredients to be reduced considerably.

The combined use of herbicides (a) and (b) achieves performance properties extending beyond what was to be expected on account of the known properties of the individual herbicides for the combination thereof. For example, the herbicidal effects for a particular harmful plant species exceed the expected value as can be estimated by standard methods, for example according to Colby or other extrapolation methods.

A synergistic effect exists whenever the effect, the herbicidal effect here, of the active ingredient combination is greater than the sum total of the effects of the active ingredients applied individually. The expected activity for a given combination of two active ingredients can be calculated according to S.R. Colby ("Calculating Synergistic and Antagonistic Responses of Herbicide Combinations", Weeds 15 (1967), 20-22) (see below).

The synergistic effects therefore permit, for example, a reduction in the application rates of the individual active ingredients, a higher efficacy at the same application rate, the control of species of harmful plants which are as yet uncovered (gaps), elevated residual action, an extended period of efficacy, an elevated speed of action, an extension of the period of application and/or a reduction in the number of individual applications required and - as a result for the user - weed

control systems which are more advantageous economically and ecologically.

Even though the combinations of the invention have excellent herbicidal activity with respect to mono- and dicotyledonous weeds, many economically important crop plants, depending on the structure of the respective active ingredient combinations of the invention and the application rate thereof, are damaged only insignificantly, if at all. Economically important crops here are, for example, dicotyledonous crops from the genera of Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, or monocotyledonous crops from the genera of Allium, Ananas, Asparagus, Avena, Hordeum, Oryza, Panicum, Saccharum, Secale, Sorghum, Triticale, Triticum and Zea.

In addition, the combination/compositions of the invention in some cases have outstanding growth-regulating properties in crop plants. They intervene in the plants' own metabolism with regulatory effect, and can thus be used for the controlled influencing of plant constituents and to facilitate harvesting, for example by triggering desiccation and stunted growth. Furthermore, they are also suitable for the general control and inhibition of unwanted vegetative growth without killing the plants in the process. Inhibition of vegetative growth plays a major role for many mono- and dicotyledonous crops since this can reduce or completely prevent lodging.

Owing to their herbicidal and plant growth-regulatory properties, the combinations/compositions can be used to control harmful plants in known plant crops or in tolerant crop plants still to be developed, modified by conventional mutagenesis or modified by genetic engineering. In general, transgenic plants feature particular advantageous properties in addition to resistances to the combinations/compositions of the invention, for example resistances to plant diseases or the organisms that cause plant diseases such as certain insects, or microorganisms such as fungi, bacteria or viruses. Other particular properties relate, for example, to the harvested material with regard to quantity, quality, storability, combinations/composition and specific constituents. For instance, there are known transgenic plants with an elevated starch content or altered starch quality, or those with a different fatty acid combinations/composition in the harvested material. Other particular properties may be tolerance or resistance to abiotic stressors, for example heat, low temperatures, drought, salinity and ultraviolet radiation.

The active ingredient combinations of the invention can preferably be used as herbicides in crops of crop plants that are resistant, or have been made resistant by genetic engineering, to the phytotoxic effects of the herbicides.

The active ingredient combinations of the invention can preferably be used in transgenic crops that are tolerant or have been rendered tolerant to the active ingredients used.

The active ingredient combinations of the invention can preferably also be used in transgenic crops which are resistant to growth regulators, for example dicamba, or to herbicides which inhibit essential plant enzymes, for example acetolactate synthases (ALS), EPSP synthases, glutamine synthases (GS) or hydroxyphenylpyruvate dioxygenases (HPPD), or to herbicides from the group of the sulfonylureas, the glyphosates, glufosinates or benzoylisoxazoles and analogous active ingredients.

The invention therefore also provides a method of controlling unwanted plant growth, optionally in crops of crop plants, preferably on uncultivated land or in plantation crops, characterized in that one or more herbicides of type (a) is/are applied with one or more herbicides of type (b) to the harmful plants, parts of plants or plant seeds (seed) or to the growing area.

The invention also provides for the use of the novel combinations of compounds (a)+(b) for control of harmful plants, optionally in crops of crop plants, preferably on uncultivated land and plantation crops, but also for control of harmful plants before the sowing of the subsequent crop plant, such as, in particular, for preparation for seeding ("burn-down application").

The active ingredient combinations of the invention may either take the form of mixed formulations of the two components, if appropriate with further active ingredients, additives and/or customary formulation auxiliaries, which are then applied in a customary manner diluted with water, or can be prepared as what are called tankmixes by joint dilution of the separately formulated or partially separately formulated components with water.

The compounds (a) and (b) or their combinations can be formulated in various ways according to which biological and/or physicochemical parameters are required. Examples of general formulation options are: wettable powders (WP), water-soluble powders (SP), emulsifiable concentrates (EC), water-soluble concentrates, aqueous solutions (SL), emulsions (EW), such as oil-in-water and water-in-oil emulsions, sprayable solutions or emulsions, dispersions based on oil or water, oil dispersions (OD), suspoemulsions, suspension concentrates (SC), oil-miscible solutions, capsule suspensions (CS), dusting products (DP), dressings, granules for soil application or scattering, granules (GR) in the form of microgranules, spray granules, absorption and adsorption granules, water-dispersible granules (WG), water-soluble granules (SG), ULV formulations, microcapsules or waxes.

The invention therefore also provides herbicidal and plant-growth-regulating compositions containing the active ingredient combinations of the invention.

The individual types of formulation are known in principle and are described, for example, in: Winnacker-Küchler, "Chemische Technologie" [Chemical Technology], Volume 7, C. Hanser Verlag Munich, 4th Ed. 1986; van Valkenburg, "Pesticides Formulations", Marcel Dekker, N.Y., 1973; K. Martens, "Spray Drying Handbook", 3rd Ed. 1979, G. Goodwin

Ltd. London.

The formulation auxiliaries required, such as inert materials, surfactants, solvents and further additives, are likewise known and are described, for example, in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964, Schönfeldt, "Grenzflächenaktive Äthylenoxidaddukte" ["Interface-active Ethylene Oxide Adducts"], Wiss. Verlagsgesellschaft, Stuttgart 1976, Winnacker-Küchler, "Chemische Technologie", Volume 7, C. Hanser Verlag Munich, 4th Ed. 1986.

On the basis of these formulations, it is also possible to produce combinations with other pesticidally active substances, such as other herbicides, fungicides, insecticides or other pesticides (for example acaricides, nematicides, molluscicides, rodenticides, aphicides, avicides, larvicides, ovicides, bactericides, viricides etc.), and also with fertilizers and/or growth regulators, for example in the form of a finished formulation or as a tankmix.

Wettable powders are preparations which can be dispersed uniformly in water and, in addition to the active ingredient, apart from a diluent or inert substance, also comprise surfactants of the ionic and/or nonionic type (wetting agents, dispersants), for example polyoxyethylated alkylphenols, polyoxyethylated fatty alcohols, polyoxyethylated fatty amines, fatty alcohol polyglycol ether sulfates, alkanesulfonates, alkylbenzenesulfonates, sodium lignosulfonate, sodium 2,2'-dinaphthylmethane-6,6'-disulfonate, sodium dibutylnaphthalenesulfonate or else sodium oleoylmethyltaurate. To produce the wettable powders, the active herbicidal ingredients are finely ground, for example in customary apparatuses such as hammer mills, blower mills and air-jet mills, and simultaneously or subsequently mixed with the formulation auxiliaries.

Emulsifiable concentrates are produced by dissolving the active ingredient in an organic solvent, for example butanol, cyclohexanone, dimethylformamide, xylene, or else relatively high-boiling aromatics or hydrocarbons or mixtures of the organic solvents, with addition of one or more ionic and/or nonionic surfactants (emulsifiers). Examples of emulsifiers which may be used are: calcium alkylarylsulfonate salts, such as calcium dodecylbenzenesulfonate, or nonionic emulsifiers such as fatty acid polyglycol esters, alkylaryl polyglycol ethers, fatty alcohol polyglycol ethers, propylene oxide-ethylene oxide condensation products, alkyl polyethers, sorbitan esters, for example sorbitan fatty acid esters, or for example polyoxyethylene sorbitan fatty acid esters.

Dusting products are obtained by grinding the active ingredient with finely distributed solids, for example talc, natural clays, such as kaolin, bentonite and pyrophyllite, or diatomaceous earth.

Suspension concentrates may be water- or oil-based. They may be produced, for example, by wet-grinding by means of commercial bead mills and optional addition of surfactants as already listed above, for example, for the other formulation types.

Emulsions, for example oil-in-water emulsions (EW), can be produced, for example, by means of stirrers, colloid mills and/or static mixers using aqueous organic solvents and optionally surfactants as already listed above, for example, for the other formulation types.

Granules can be produced either by spraying the active ingredient onto granular inert material capable of adsorption or by applying active ingredient concentrates to the surface of carrier substances, such as sand, kaolinites or granular inert material, by means of adhesives, for example polyvinyl alcohol, sodium polyacrylate or else mineral oils. Suitable active ingredients can also be granulated in the manner customary for the production of fertilizer granules - if desired as a mixture with fertilizers.

Water-dispersible granules are produced generally by processes such as spray-drying, fluidized bed granulation, pan granulation, mixing with high-speed mixers and extrusion without solid inert material.

The agrochemical preparations generally contain 0.1 to 99 per cent by weight, especially 0.2% to 95% by weight, of active ingredients of types (a) and/or (b), the following concentrations being customary, depending on the type of formulation:

In wettable powders, the active ingredient concentration is, for example, about 10% to 95% by weight, the remainder to 100% by weight consisting of customary formulation constituents. In the case of emulsifiable concentrates, the active ingredient concentration may be about 1% to 90% by weight, preferably 5 to 80 per cent by weight.

Formulations in the form of dusts usually contain 5% to 20% by weight of active ingredient; sprayable solutions contain about 0.05 to 80, preferably 2 to 50, per cent by weight (% by weight) of active ingredient.

In the case of granules such as dispersible granules, the active ingredient content depends partially on whether the active compound is in liquid or solid form and on which granulation auxiliaries and fillers are used. In general, the content in the water-dispersible granules is between 1% and 95% by weight, preferably between 10% and 80% by weight.

In addition, the active ingredient formulations mentioned optionally comprise the respectively customary adhesives, wetting agents, dispersants, emulsifiers, penetrants, preservatives, antifreeze agents and solvents, fillers, colorants and carriers, antifoams, evaporation inhibitors and pH- or viscosity-modifying agents.

For application, the formulations in commercial form are, if appropriate, diluted in a customary manner, for

example in the case of wettable powders, emulsifiable concentrates, dispersions and water-dispersible granules with water. Dust-type preparations, granules for soil application or broadcasting and sprayable solutions are not normally diluted further with other inert substances prior to application.

The active ingredients can be deployed onto the plants, plant parts, plant seeds or the area under cultivation (soil), preferably on the green plants and plant parts, and optionally additionally onto the soil.

One possible use is the joint application of the active ingredients in the form of tankmixes, where the optimally formulated concentrated formulations of the individual active ingredients together are mixed in a tank with water, and the spray liquor obtained is deployed.

A joint herbicidal formulation of the inventive combination of active ingredients (a) and (b) has the advantage that it can be applied more easily since the quantities of the components are already set at the correct ratio to one another. Moreover, the auxiliaries in the formulation can be adjusted optimally to one another, whereas a tank mix of different formulations may result in unwanted combinations of auxiliaries.

**<u>Testing of Compounds according to the Invention:</u>**

A. Formulation examples

a) A dusting product is obtained by mixing 10 parts by weight of an active ingredient (a) or (b) or an active ingredient mixture (a) + (b) (and optionally further active ingredient components) and/or salts thereof and 90 parts by weight of talc as inert substance, and comminuting in a beater mill.

b) A wettable powder which is readily dispersible in water is obtained by mixing 25 parts by weight of an active ingredient/active ingredient mixture, 64 parts by weight of kaolin-containing quartz as inert substance, 10 parts by weight of potassium lignosulfonate and 1 part by weight of sodium oleoylmethyltaurate as wetting agent and dispersant, and grinding the mixture in a pinned-disk mill.

c) A dispersion concentrate which is readily dispersible in water is obtained by mixing 20 parts by weight of an active ingredient/active ingredient mixture with 6 parts by weight of alkylphenol polyglycol ether (Triton® X 207), 3 parts by weight of isotridecanol polyglycol ether (8 EO) and 71 parts by weight of paraffinic mineral oil (boiling range for example approximately 255 to 277°C) and grinding the mixture in a friction ball mill to a fineness of below 5 microns.

d) An emulsifiable concentrate is obtained from 15 parts by weight of an active ingredient/active ingredient mixture, 75 parts by weight of cyclohexanone as solvent and 10 parts by weight of oxyethylated nonylphenol as emulsifier.

e) Water-dispersible granules are obtained by mixing

75 parts by weight of an active ingredient/active ingredient mixture,
10 parts by weight of calcium lignosulfonate,
5 parts by weight of sodium lauryl sulfate,
3 parts by weight of polyvinyl alcohol and
7 parts by weight of kaolin,

grinding the mixture in a pinned-disk mill, and granulating the powder in a fluidized bed by spray application of water as a granulating liquid.

f) Water-dispersible granules are also obtained by homogenizing and precomminuting, in a colloid mill,

25 parts by weight of an active ingredient/active ingredient mixture,
5 parts by weight of sodium 2,2'-dinaphthylmethane-6,6'-disulfonate,
2 parts by weight of sodium oleoylmethyltaurate,
1 part by weight of polyvinyl alcohol,
17 parts by weight of calcium carbonate and
50 parts by weight of water,

then grinding the mixture in a bead mill and atomizing and drying the resulting suspension in a spray tower by means of a one-phase nozzle.

B. Biological examples

On employment of the combinations of the invention, herbicidal effects on a harmful plant species that exceed the formal sum total of the effects of the herbicides present when applied alone are frequently observed. Alternatively, in some cases, it is possible to observe that a smaller application rate for the herbicide combination is required in order to achieve the same effect for a harmful plant species compared to the individual preparations. Such increases in action or increases in effectiveness or reductions in application rate are a strong indication of a synergistic effect.

When the observed efficacies already exceed the formal sum total of the values of the tests with individual applications, they also exceed the expected value according to Colby, which is calculated using the formula below and is likewise regarded as an indication of synergism (cf. S. R. Colby; in Weeds 15 (1967) pp. 20 to 22):

$$E^C = A+B - (A \cdot B/100)$$

where:

A = efficacy of the active ingredient (a) in % at an application rate of a g a.i./ha;
B = efficacy of the active ingredient (b) in % at an application rate of b g a.i./ha;
$E^C$ = expected value of the effect of the combination (a)+(b) in % at the combined application rate **a+b** g a.i./ha.

The observed values ($E^A$) from the experiments, given suitable low dosages, show an effect of the combinations exceeding the expected values according to Colby (Δ).

1. Post-emergence action against weeds

Seeds or rhizome pieces of mono- and dicotyledonous weeds are placed in sandy loam in pots, covered with soil and grown in a greenhouse under good growth conditions (temperature, air humidity, water supply). Approximately three weeks after sowing, the test plants are treated at the three-leaf stage with the combination/compositions of the invention. The combination/compositions of the invention, formulated as spray powders or as emulsion concentrates, are sprayed onto the green plant parts in various dosages with an application rate equivalent to 300 to 800 l/ha of water. After the test plants have been left to stand in the greenhouse under optimal growth conditions for about 2 to 4 weeks, the action of the preparations is scored visually in comparison to untreated controls. The combination /compositions of the invention also have good post-emergence herbicidal activity against a broad spectrum of economically important weed grasses and broadleaved weeds.

Effects of the combinations of the invention that exceed the formal sum total of the effects in the case of individual application of the herbicides are frequently observed here. The observed values from the experiments, given suitable low dosages, show an effect of the combinations exceeding the expected values according to Colby.

2. Herbicidal pre-emergence and post-emergence action (field trials)

The experiments were conducted on outdoor plots in accordance with the greenhouse experiments from section 1. The rating was analogous to the experiment in section 1.

3. Herbicidal action and crop plant compatibility (field trials)

Crop plants were grown in outdoor plots under natural outdoor conditions, by laying out seeds or rhizome pieces of typical harmful plants or utilizing natural weed flora. The treatment with the combinations/compositions of the invention followed the emergence of the harmful plants and of the crop plants, generally at the 2- to 4-leaf stage; in some cases (as specified), individual active ingredients or active ingredient combinations were applied pre-emergence or as a sequential treatment partly pre-emergence and/or post-emergence.

In the case of plantation crops, in general, only the soil between the individual crop plants was treated with the active ingredients.

After application, for example 2, 4, 6 and 8 weeks after application, the effect of the preparations was rated visually by comparison with untreated controls. The combination /compositions of the invention also have synergistic herbicidal activity in field trials against a broad spectrum of economically important weed grasses and broadleaved weeds. The comparison showed that the combinations of the invention usually have greater, and in some cases considerably greater, herbicidal action than the sum total of the effects of the individual herbicides, and therefore suggests synergism. The effects over significant parts of the rating period were also above the expected values according to Colby, and

therefore likewise suggest synergism. The crop plants, by contrast, were damaged only insignificantly, if at all, as a result of the treatments with the herbicidal products.

4. Specific trial examples

The following abbreviations are used in the description and the tables that follow:

g a.i./ha = grams of active substance (active ingredient) (= 100% active ingredient) per hectare;

The sum total of the effects of the individual applications is reported under $E^A$;
expected values according to Colby are each reported under $E^C$.
The biological results of the combinations/compositions according to the invention are summarized in Tables 7. The rating period is reported in days after application (DAT).

## Claims

1. Combinations comprising

(a) substituted isoxazolincarboxamides of the formula (I) or agrochemical acceptable salts thereof

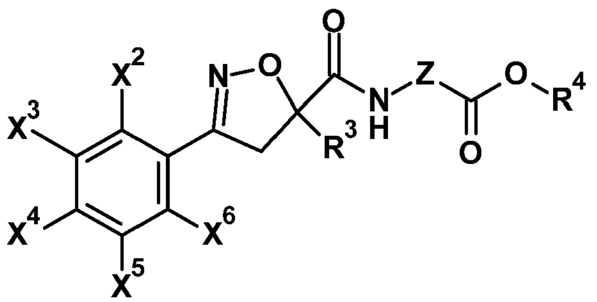

(I)

in which

$R^3$ is ($C_1$-$C_3$)-alkyl, ($C_1$-$C_3$)-alkoxy oder ($C_2$-$C_3$)-alkenyl;
$R^4$ is hydrogen or ($C_1$-$C_6$)-alkyl;
Z means Z-1 or Z-2:

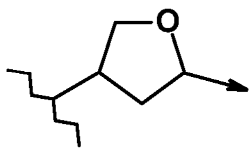

Z-1

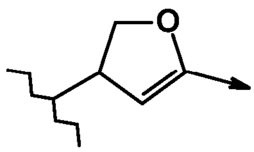

Z-2

where the arrow in each case denotes a bond to the group C=W of the formula (I);

$X^2$, $X^4$ und $X^6$ independently of each other mean hydrogen or fluorine;
$X^3$ und $X^5$ independently of each other mean hydrogen, fluorine or chlorine;

and
(b) one or more compounds selected from compounds B1 to B23 specified in the table below: Table 1:

| (B) | Chemical structure | Name | CAS-RN |
|---|---|---|---|
| B1 | 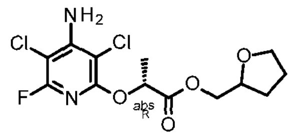 | (Tetrahydrofuran-2-yl)methyl (2R)-2-[(4-amino-3,5-dichloro-6-fluoro-2-pyridyl)oxy]propanoate | 2445983-82-2 |
| B2 | 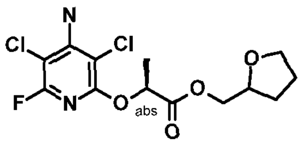 | (Tetrahydrofuran-2-yl)methyl (2S)-2-[(4-amino-3,5-dichloro-6-fluoro-2-pyridyl)oxy]propanoate | |
| B3 | 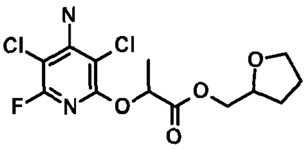 | (Tetrahydrofuran-2-yl)methyl (2R/S)-2-[(4-amino-3,5-dichloro-6-fluoro-2-pyridyl)oxy]propanoate | 2374902-16-4 |
| B4 | 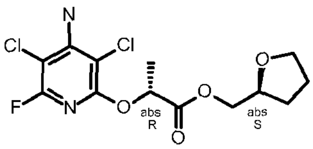 | [(2S)-Tetrahydrofuran-2-yl]methyl (2R)-2-[(4-amino-3,5-dichloro-6-fluoro-2-pyridyl)oxy]propanoate | |
| B5 | 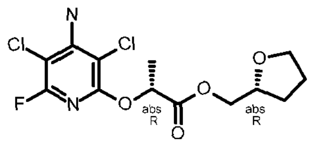 | [(2R)-Tetrahydrofuran-2-yl]methyl (2R)-2-[(4-amino-3,5-dichloro-6-fluoro-2-pyridyl)oxy]propanoate | |
| B6 | 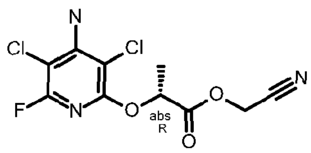 | Cyanomethyl (2R)-2-[(4-amino-3,5-dichloro-6-fluoro-2-pyridyl)oxy]propanoate | 2445983-51-5 |
| B7 | 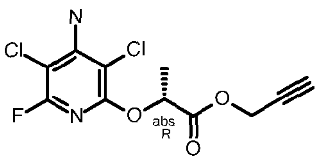 | Prop-1-yn-3-yl (2R)-2-[(4-amino-3,5-dichloro-6-fluoro-2-pyridyl)oxy]propanoate | 2445983-59-3 |
| B8 | 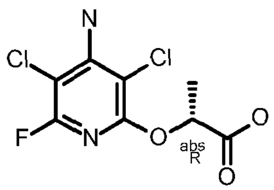 | (2R)-2-[(4-Amino-3,5-dichloro-6-fluoro-2-pyridyl)oxy]propanoic acid | 2445980-81-2 |
| B9 | 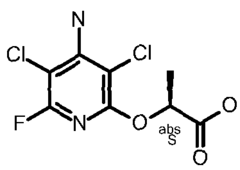 | (2S)-2-[(4-Amino-3,5-dichloro-6-fluoro-2-pyridyl)oxy]propanoic acid | |
| B10 | 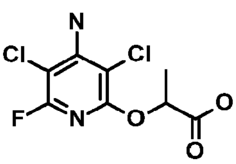 | 2-[(4-Amino-3,5-dichloro-6-fluoro-2-pyridyl)oxy]propanoic acid | 50848-50-5 |

(continued)

| (B) | Chemical structure | Name | CAS-RN |
|---|---|---|---|
| B11 | 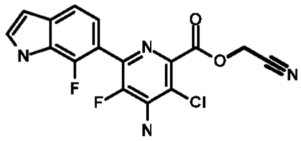 | Cyanomethyl 4-amino-3-chloro-5-fluoro-6-(7-fluoro-1H-indol-6-yl)pyridin-2-carboxylate | 2251111-18-7 |
| B12 | 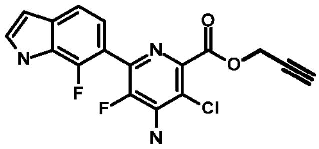 | Prop-1-yn-3-yl 4-amino-3-chloro-5-fluoro-6-(7-fluor-1H-indol-6-yl)pyridin-2-carboxylate | 2251111-17-6 |
| B13 | 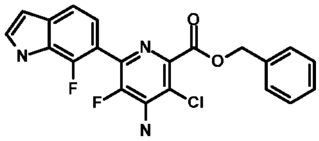 | Benzyl 4-amino-3-chloro-5-fluoro-6-(7-fluor-1H-indol-6-yl)pyridin-2-carboxylate | 1884642-19-6 |
| B14 | 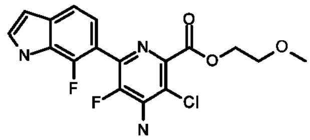 | Methoxyethyl 4-amino-3-chloro-5-fluoro-6-(7-fluor-1H-indol-6-yl)pyridin-2-carboxylate | |
| B15 | 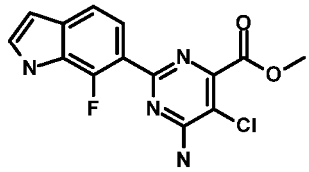 | Methyl 6-amino-5-chloro-2-(7-fluoro-1*H*-indol-6-yl)-4-pyrimidinecarboxylate | 1628702-50-0 |
| B16 | 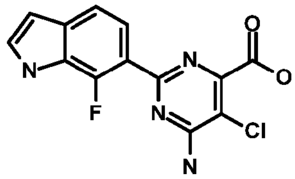 | 6-Amino-5-chloro-2-(7-fluoro-1*H*-indol-6-yl)-4-pyrimidinecarboxylic acid | |
| B17 | 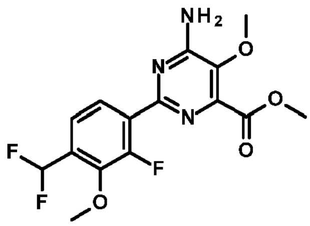 | Methyl 6-amino-2-[4-(difluoromethyl)-2-fluoro-3-methoxy-phenyl]-5-methoxy-pyrimidine-4-carboxylate | 3054208-49-7 |
| B18 | 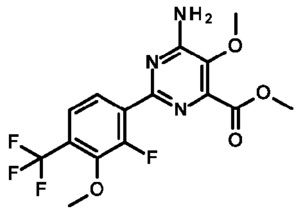 | Methyl 6-amino-2-[4-(trifluoromethyl)-2-fluoro-3-methoxy-phenyl]-5-methoxy-pyrimidine-4-carboxylate | 3054208-48-6 |

(continued)

| (B) | Chemical structure | Name | CAS-RN |
|---|---|---|---|
| B19 | 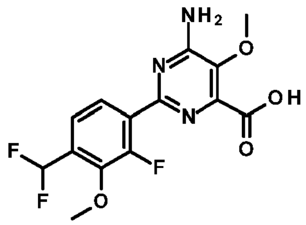 | 6-Amino-2-[4-(difluoromethyl)-2-fluoro-3-methoxy-phenyl] -5 - methoxy-pyrimidine-4-carboxylic acid | |
| B20 | 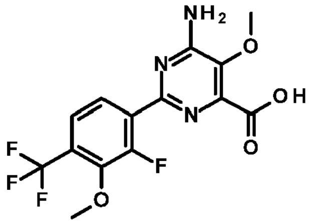 | 6-Amino-2-[4-(trifluoromethyl)-2-fluoro-3-methoxy-phenyl] -5 - methoxy-pyrimidine-4-carboxylic acid | 3054208-46-4 |
| B21 | 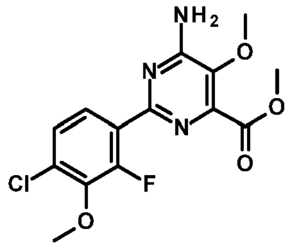 | Methyl 6-amino-2-[4-chloro-2-fluoro-3-methoxy-phenyl] -5 - methoxy-pyrimidine-4-carboxylate | 1126318-85-1 |
| B22 | 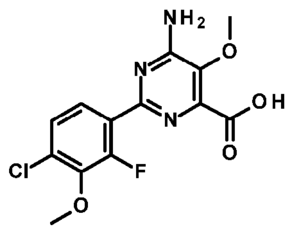 | 6-Amino-2-[4-chloro-2-fluoro-3-methoxy-phenyl]-5-methoxy-pyrimidine-4-carboxylic acid | 1126319-69-4 |
| B23 | 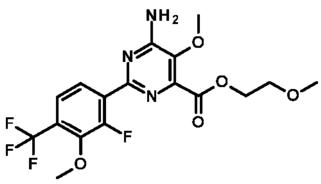 | Methoxyethyl 6-amino-2-[4-(trifluoromethyl)-2-fluoro-3-methoxy-phenyl]-5-methoxy-pyrimidine-4-carboxylate | 3054209-19-4 |

**2.** Combinations according to Claim 1, **characterized in that** compound of formula (I) is defined as follows:

$R^3$ is methyl, vinyl or methoxy;
$R^4$ is hydrogen , methyl, ethyl oder isopropyl;
Z means Z-1 or Z-2:

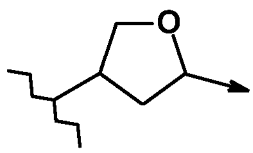

Z-1

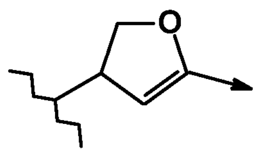

Z-2

where the arrow in each case denotes a bond to the group C=W of the formula (I);

$X^2$, $X^4$ and $X^6$ is hydrogen;
$X^3$ and $X^5$ independently of each other mean hydrogen, fluorine or chlorine.

**3.** Combinations according to Claim 1, **characterized in that** compound of formula (I) is one of the following compounds:

| Cpd. No. | IUPAC Name | Structural formula |
|---|---|---|
| A1 | methyl rel-(2R,4R)-4-[[3-(3,5-dichlorophenyl)-5-methoxy-4H-isoxazole-5-carbonyl]amino]tetrahydro-furan-2-carboxylate | 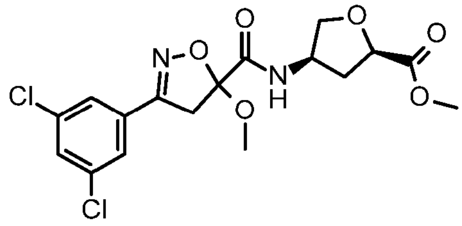 rel-(2R,4R) |
| A2 | methyl rel-(2R,4R)-4-[[3-(3,5-dichlorophenyl)-5-vinyl-4H-isoxazole-5-carbonyl]amino]tetrahydrofuran-2-carboxylate | 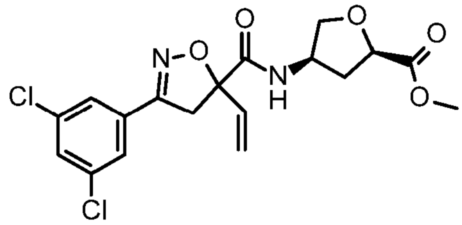 rel-(2R,4R) |
| A3 | methyl(2R*,4R*)-4-[[(5S)-3-(3,5-difluorophenyl)-5-vinyl-4H-isoxazole-5-carbonyl]amino]tetrahydrofuran-2-carboxylate | 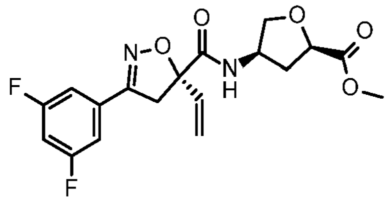 rel-(2R,4R) |
| A4 | isopropyl rel-(2R,4R)-4-[[3-(3-fluorophenyl)-5-methyl-4H-isoxazole-5-carbonyl]amino]tetrahydrofuran-2-carboxylate | 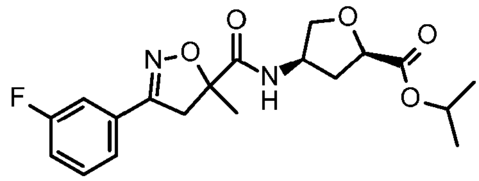 rel-(2R,4R) |
| A5 | methyl (3RS)-3-[[(5S)-3-(3,5-difluorophenyl)-5-vinyl-4H-isoxazole-5-carbonyl] amino]-2,3 - dihydrofuran-5-carboxylate | 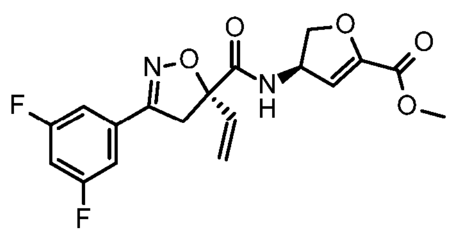 |

(continued)

| Cpd. No. | IUPAC Name | Structural formula |
|---|---|---|
| A6 | methyl (3RS)-3-[[(5R)-3-(3,5-difluorophenyl)-5 -methyl-4H-isoxazole-5-carbonyl] amino]-2,3 - dihydrofuran-5-carboxylate | 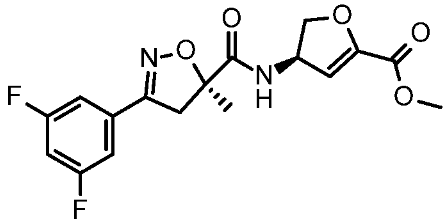 |

**4.** Combinations according to Claim 1, **characterized in that** compound of formula (I) and (B) or agrochemical acceptable salts thereof are as defined in the table:

| Binary combination | Compound of formula (I) | Compound (B) |
|---|---|---|
| Z1-1 | A3 | B1 |
| Z1-8 | A3 | B8 |
| Z1-11 | A3 | B11 |
| Z1-12 | A3 | B12 |
| Z1-23 | A3 | B23 |

**5.** Combinations according to any of claims claims 1 to 4 wherein the ratio of herbicides (a):(b) based on weight are in the range of 1: 100 to 100: 1

**6.** Composition comprising in addition to a combination according to any of claims 1 to 5 surfactants and/or extenders.

**7.** Process for preparing a herbicidal composition according to claim 6, **characterized in that** a combination according to any of claims 1 to 5 is mixed with surfactants and/or extenders.

**8.** Use of a combination according to any of claims 1 to 5 for controlling undesirable plants.

**9.** Method for controlling undesirable plants, **characterized in that** combinations according to any of claims 1 to 5 are allowed to act on the undesirable plants and/or their habitat.

**10.** Method according to claim 9, **characterized in that** the plant crops are genetically modified.

**11.** Method according to claims 9 or 10, **characterized in that** the application rate of the herbicides are between 0,5 and 500 g a.i./ha.

Europäisches Patentamt
European Patent Office
Office européen des brevets

# EUROPEAN SEARCH REPORT

Application Number
EP 24 22 2108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CA 3 122 156 A1 (BAYER AG [DE]) 11 June 2020 (2020-06-11) * claims 1-15 * ----- | 1-11 | INV. A01N43/80 A01P13/00 A01N43/40 A01N43/54 |
| Y,D | WO 2020/135235 A1 (QINGDAO KINGAGROOT CHEMICAL COMPOUND CO LTD [CN]) 2 July 2020 (2020-07-02) * compounds 1-26, 2-267, 2-275, 2-298 * ----- | 1-11 | |
| Y | US 4 110 104 A (MCGREGOR STANLEY D) 29 August 1978 (1978-08-29) * column 8, lines 20-21 * ----- | 1-11 | |
| Y,D | WO 2018/208582 A1 (DOW AGROSCIENCES LLC [US]) 15 November 2018 (2018-11-15) * compounds 5, 6, 7 * ----- | 1-11 | |
| Y | WO 2016/044283 A1 (DOW AGROSCIENCES LLC [US]) 24 March 2016 (2016-03-24) * compound 2 * ----- | 1-11 | TECHNICAL FIELDS SEARCHED (IPC) |
| Y,D | WO 2014/151005 A1 (DOW AGROSCIENCES LLC [US]) 25 September 2014 (2014-09-25) * compound 1.31 * ----- | 1-11 | A01N A01P |
| Y,D | WO 2024/169666 A1 (QINGDAO KINGAGROOT CHEMICAL COMPOUND CO LTD [CN]) 22 August 2024 (2024-08-22) * compounds 1, 3, 4, 74 * ----- | 1-11 | |

The present search report has been drawn up for all claims

1

| Place of search | Date of completion of the search | Examiner |
|---|---|---|
| Munich | 8 May 2025 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 22 2108

This annex lists the patent family members relating to the patent documents cited in the above-mentioned European search report. The members are as contained in the European Patent Office EDP file on
The European Patent Office is in no way liable for these particulars which are merely given for the purpose of information.

08-05-2025

| Patent document cited in search report | Publication date | Patent family member(s) | Publication date |
|---|---|---|---|
| CA 3122156 A1 | 11-06-2020 | AR 117260 A1 | 21-07-2021 |
| | | AU 2019392518 A1 | 24-06-2021 |
| | | BR 112021010094 A2 | 24-08-2021 |
| | | CA 3122156 A1 | 11-06-2020 |
| | | CL 2021001469 A1 | 19-11-2021 |
| | | CN 113347882 A | 03-09-2021 |
| | | DK 3890488 T3 | 03-04-2023 |
| | | EA 202191563 A1 | 28-10-2021 |
| | | EP 3890488 A1 | 13-10-2021 |
| | | ES 2941285 T3 | 19-05-2023 |
| | | FI 3890488 T3 | 30-03-2023 |
| | | HR P20230284 T1 | 12-05-2023 |
| | | HU E061391 T2 | 28-06-2023 |
| | | JP 2022511487 A | 31-01-2022 |
| | | KR 20210102295 A | 19-08-2021 |
| | | LT 3890488 T | 11-04-2023 |
| | | PH 12021551340 A1 | 13-12-2021 |
| | | PL 3890488 T3 | 02-05-2023 |
| | | PT 3890488 T | 11-04-2023 |
| | | SI 3890488 T1 | 31-05-2023 |
| | | UA 129190 C2 | 05-02-2025 |
| | | US 2023032505 A1 | 02-02-2023 |
| | | WO 2020114932 A1 | 11-06-2020 |
| | | ZA 202104713 B | 18-12-2024 |
| WO 2020135235 A1 | 02-07-2020 | AR 117524 A1 | 11-08-2021 |
| | | AU 2019415587 A1 | 01-07-2021 |
| | | BR 112021012447 A2 | 08-09-2021 |
| | | CA 3122138 A1 | 02-07-2020 |
| | | CL 2021001689 A1 | 17-12-2021 |
| | | CN 111377856 A | 07-07-2020 |
| | | CO 2021008276 A2 | 19-07-2021 |
| | | EP 3904341 A1 | 03-11-2021 |
| | | JP 2022515285 A | 17-02-2022 |
| | | JP 2023139056 A | 03-10-2023 |
| | | MA 53683 A1 | 28-02-2022 |
| | | PE 20211476 A1 | 05-08-2021 |
| | | PH 12021551518 A1 | 28-02-2022 |
| | | TN 2021000132 A1 | 05-01-2023 |
| | | UA 128533 C2 | 07-08-2024 |
| | | US 2022098153 A1 | 31-03-2022 |
| | | WO 2020135235 A1 | 02-07-2020 |
| | | ZA 202104064 B | 28-09-2022 |
| US 4110104 A | 29-08-1978 | NONE | |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 22 2108

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | Publication date | Patent family member(s) | Publication date |
|---|---|---|---|
| WO 2018208582 A1 | 15-11-2018 | AR 111686 A1 | 07-08-2019 |
| | | AU 2018264871 A1 | 12-12-2019 |
| | | BR 112019023586 A2 | 26-05-2020 |
| | | CA 3063094 A1 | 15-11-2018 |
| | | CL 2019003217 A1 | 21-02-2020 |
| | | CN 111065269 A | 24-04-2020 |
| | | CN 114957209 A | 30-08-2022 |
| | | DK 3621439 T3 | 27-02-2023 |
| | | EA 201992666 A1 | 19-03-2020 |
| | | EP 3621439 A1 | 18-03-2020 |
| | | ES 2939274 T3 | 20-04-2023 |
| | | HR P20230184 T1 | 31-03-2023 |
| | | HU E061325 T2 | 28-06-2023 |
| | | IL 270541 A | 31-12-2019 |
| | | JP 7181225 B2 | 30-11-2022 |
| | | JP 2020519601 A | 02-07-2020 |
| | | KR 20200015532 A | 12-02-2020 |
| | | LT 3621439 T | 10-03-2023 |
| | | MA 49093 A | 18-03-2020 |
| | | NZ 759440 A | 28-04-2023 |
| | | PH 12019502508 A1 | 13-07-2020 |
| | | PL 3621439 T3 | 27-03-2023 |
| | | PT 3621439 T | 27-02-2023 |
| | | RS 63987 B1 | 31-03-2023 |
| | | SI 3621439 T1 | 28-04-2023 |
| | | TW 201900630 A | 01-01-2019 |
| | | UA 126341 C2 | 21-09-2022 |
| | | US 2020068888 A1 | 05-03-2020 |
| | | UY 37727 A | 02-01-2019 |
| | | WO 2018208582 A1 | 15-11-2018 |
| | | ZA 201907710 B | 26-04-2023 |
| WO 2016044283 A1 | 24-03-2016 | AR 101858 A1 | 18-01-2017 |
| | | EP 3193599 A1 | 26-07-2017 |
| | | ES 2856849 T3 | 28-09-2021 |
| | | TW 201608978 A | 16-03-2016 |
| | | US 2016073632 A1 | 17-03-2016 |
| | | WO 2016044283 A1 | 24-03-2016 |
| WO 2014151005 A1 | 25-09-2014 | AR 095512 A1 | 21-10-2015 |
| | | AR 118275 A2 | 22-09-2021 |
| | | AU 2014235452 A1 | 01-10-2015 |
| | | AU 2018214049 A1 | 23-08-2018 |
| | | AU 2020203413 A1 | 11-06-2020 |
| | | BR 102014006322 A2 | 21-10-2014 |
| | | CA 2904341 A1 | 25-09-2014 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO. EP 24 22 2108

This annex lists the patent family members relating to the patent documents cited in the above-mentioned European search report. The members are as contained in the European Patent Office EDP file on
The European Patent Office is in no way liable for these particulars which are merely given for the purpose of information.

08-05-2025

| Patent document cited in search report | Publication date | Patent family member(s) | Publication date |
|---|---|---|---|
| | | CL 2015002542 A1 | 08-07-2016 |
| | | CN 105209451 A | 30-12-2015 |
| | | CN 110003170 A | 12-07-2019 |
| | | CN 111704602 A | 25-09-2020 |
| | | CR 20150520 A | 15-02-2016 |
| | | DK 2970187 T3 | 07-10-2019 |
| | | DK 3569600 T3 | 25-09-2023 |
| | | EP 2970187 A1 | 20-01-2016 |
| | | EP 3569600 A1 | 20-11-2019 |
| | | ES 2747100 T3 | 10-03-2020 |
| | | ES 2956744 T3 | 27-12-2023 |
| | | FI 3569600 T3 | 13-09-2023 |
| | | HR P20191673 T1 | 13-12-2019 |
| | | HR P20231112 T1 | 22-12-2023 |
| | | HU E045334 T2 | 30-12-2019 |
| | | HU E062783 T2 | 28-12-2023 |
| | | IL 261194 A | 31-10-2018 |
| | | JP 6388633 B2 | 12-09-2018 |
| | | JP 2016514669 A | 23-05-2016 |
| | | JP 2018199690 A | 20-12-2018 |
| | | KR 20150133776 A | 30-11-2015 |
| | | LT 2970187 T | 10-10-2019 |
| | | LT 3569600 T | 25-09-2023 |
| | | MY 175450 A | 29-06-2020 |
| | | MY 192467 A | 22-08-2022 |
| | | NZ 712174 A | 24-04-2020 |
| | | NZ 751580 A | 24-04-2020 |
| | | PH 12015502142 A1 | 25-01-2016 |
| | | PL 2970187 T3 | 31-12-2019 |
| | | PL 3569600 T3 | 27-11-2023 |
| | | PT 2970187 T | 14-10-2019 |
| | | PT 3569600 T | 20-09-2023 |
| | | RS 64569 B1 | 31-10-2023 |
| | | RU 2015144305 A | 20-04-2017 |
| | | RU 2018132354 A | 19-10-2018 |
| | | SI 2970187 T1 | 29-11-2019 |
| | | SI 3569600 T1 | 30-11-2023 |
| | | UA 118191 C2 | 10-12-2018 |
| | | US 2014274695 A1 | 18-09-2014 |
| | | US 2015126366 A1 | 07-05-2015 |
| | | US 2015126372 A1 | 07-05-2015 |
| | | US 2015274756 A1 | 01-10-2015 |
| | | US 2017050957 A1 | 23-02-2017 |
| | | US 2019071457 A1 | 07-03-2019 |
| | | UY 35434 A | 31-10-2014 |
| | | WO 2014151005 A1 | 25-09-2014 |



For more details about this annex : see Official Journal of the European Patent Office, No. 12/82

## ANNEX TO THE EUROPEAN SEARCH REPORT ON EUROPEAN PATENT APPLICATION NO. EP 24 22 2108

This annex lists the patent family members relating to the patent documents cited in the above-mentioned European search report. The members are as contained in the European Patent Office EDP file on
The European Patent Office is in no way liable for these particulars which are merely given for the purpose of information.

08-05-2025

| Patent document cited in search report | Publication date | Patent family member(s) | Publication date |
|---|---|---|---|
| | | ZA 201506622 B | 30-11-2016 |
| WO 2024169666 A1 | 22-08-2024 | CN 118515618 A | 20-08-2024 |
| | | WO 2024169666 A1 | 22-08-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020135235 A1
- WO 2018208582 A1
- WO 2018228985 A1
- WO 2019145245 A1
- WO 2021036251 A1
- WO 2021017502 A1
- WO 2021017817 A1
- US 3761486 A
- WO 2014151005 A1
- CN 118515618 A
- WO 2024169666 A1
- WO 2017201377 A1
- WO 2009029735 A1
- WO 2010099279 A1
- WO 2020133403 A1
- WO 2024188052 A1


### Non-patent literature cited in the description


- Weed Research. 1986, vol. 26, 441-445
- The Pesticide Manual. The British Crop Protection Council and the Royal Soc. of Chemistry, 2006
- *CHEMICAL ABSTRACTS*, 1398-61-4
- *CHEMICAL ABSTRACTS*, 9012-76-4
- **S.R. COLBY**. Calculating Synergistic and Antagonistic Responses of Herbicide Combinations. *Weeds*, 1967, vol. 15, 20-22
- **WINNACKER-KÜCHLER**. Chemische Technologie. C. Hanser Verlag, 1986, vol. 7
- **VAN VALKENBURG**. Pesticides Formulations. Marcel Dekker, 1973
- **K. MARTENS**. Spray Drying Handbook. G. Goodwin Ltd., 1979
- **WATKINS**. Handbook of Insecticide Dust Diluents and Carriers. Darland Books
- **H.V. OLPHEN**. Introduction to Clay Colloid Chemistry. J. Wiley & Sons
- **MARSDEN**. Solvents Guide. Interscience, 1963
- **MCCUTCHEON'S**. Detergents and Emulsifiers Annual. MC Publ. Corp
- **SISLEY** ; **WOOD**. Encyclopedia of Surface Active Agents. Chem. Publ. Co. Inc., 1964
- **SCHÖNFELDT**. Grenzflächenaktive Athylenoxidaddukte. Wiss. Verlagsgesellschaft, 1976
- **S. R. COLBY**. *Weeds*, 1967, vol. 15, 20-22